# EUROPEAN PATENT APPLICATION

(11) **EP 4 542 754 A1**
(43) Date of publication of application: **23.04.2025**
(21) Application number: 22947578.5
(22) Date of filing: 15.08.2022
(51) Int. Cl.: H01M 50/451

(54) **SEPARATOR, PREPARATION METHOD THEREFOR, AND SECONDARY BATTERY AND ELECTRIC APPARATUS RELATED THERETO**

(30) Priority: 24.06.2022 WO PCT/CN2022/101261
(71) Applicant: CONTEMPORARY AMPEREX TECHNOLOGY (HONG KONG) LIMITED, Hong Kong (HK)
(72) Inventor: XU, Ming, Ningde, Fujian 352100 (CN); YANG, Jianrui, Ningde, Fujian 352100 (CN); WEI, Manxiang, Ningde, Fujian 352100 (CN)
(74) Representative: Gong, Jinping
(86) International application number: PCT/CN2022/112582
(87) International publication number: WO 2023/245837

(57) **Abstract**

The present application provides a separator, a method for preparing the same, and a secondary battery and an electrical device related thereto. The separator includes a porous substrate and a coating layer disposed on one or more surface of the porous substrate, wherein the coating layer includes a three-dimensional skeleton structure and a filler, and at least a portion of the filler is filled in the three-dimensional skeleton structure, and the coating layer has a Zeta potential of less than 0 mV. The separator of the present application has the characteristics including excellent heat resistance, good uniformity, and good ion conductivity, so that a secondary battery using the separator can have the combined characteristics of high energy density, high thermal safety performance, and long service life.

## Description

### CROSS-REFERENCE TO RELATED APPLICATION

This application claims priority to PCT Patent application PCT/CN2022/101261 entitled "SEPARATOR, METHOD FOR PREPARING THE SAME AND SECONDARY BATTERY AND ELECTRICAL DEVICE RELATED THERETO" and filed on June 24, 2022, which is incorporated herein by reference in its entirety.

### TECHNICAL FIELD

The present application belongs to the field of battery technology, and in particular relates to a separator, a method for preparing the same, and a secondary battery and an electrical device related thereto.

### BACKGROUND

In recent years, secondary batteries have been widely used in energy storage power systems such as hydraulic, thermal, wind and solar power plants, as well as in many fields such as electric tools, electric bicycles, electric motorcycles, electric vehicles, military equipment, and aerospace. With the application and promotion of secondary batteries, their safety issues, especially thermal safety issues, have received more and more attention. However, the existing methods for improving the thermal safety performance of secondary batteries are often not conducive to balancing the energy density and capacity exertion of secondary batteries. Therefore, how to obtain a secondary battery having the combined characteristics of high energy density, high thermal safety performance and long service life is a key challenge in designing secondary battery.

### SUMMARY

An object of the present application is to provide a separator, a method for preparing the same and a secondary battery and an electrical device related thereto, wherein the separator has the characteristics including excellent heat resistance, good uniformity and good ion conductivity, so that a secondary battery using the separator can have the combined characteristics of high energy density, high thermal safety performance, and long service life.

A first aspect of the present application provides a separator, including a porous substrate and a coating layer disposed on one or more surface of the porous substrate, wherein the coating layer includes a three-dimensional skeleton structure and a filler, and at least a portion of the filler is filled in the three-dimensional skeleton structure, and the coating layer has a Zeta potential of less than 0 mV. The Zeta potential of the coating layer is tested by the following method: stirring and mixing 30 g of coating material powder with 2000 g of deionized water to obtain a dispersion, and testing the Zeta potential of the obtained dispersion with a Zeta potentiometer, test result being the Zeta potential of the coating layer.

In the separator provided in the present application, when the Zeta potential of the coating layer is within the suitable range, the coating slurry has a good dispersibility, thus after the coating slurry is dried, a coating layer with good uniformity of areal density and thickness can be formed, thereby improving the heat resistance of the separator, and at the same time the coating layer has uniform pore distribution, which ensures good ion conductivity of the coating layer, thereby improving the rate performance, thermal safety performance and cycle performance of the secondary battery. At least a portion of the filler is filled in the three-dimensional skeleton structure, which helps the filler and the three-dimensional skeleton structure to form an embedding effect, thereby not only increasing the heat resistance of the separator, reducing the shrinkage of the separator when heated, reducing the risk of short circuit between the positive electrode and the negative electrode, resulting in high thermal safety performance of the secondary battery, but also maintaining high bonding strength between the coating layer and the porous substrate, preventing the filler from falling off during the long-term charge and discharge of the secondary battery. At least a portion of the filler is filled in the three-dimensional skeleton structure, whereby the filler can further be overlapped with the three-dimensional skeleton structure, which enables the coating layer to have a stable spatial network structure, thereby not only increasing the number of ion conduction channels of the separator and promoting ion transport, but also improving the infiltration and retention characteristics of the separator to the electrolyte and further enabling the secondary battery using the separator of the present application to have a long service life. Since the coating layer of the present application has high heat resistance, thus thinner porous substrates can be used, and the secondary battery comprising the separator of the present application can further have high energy density.

In some embodiments of the present application, the coating layer has a Zeta potential of from -50 mV to - 5 mV, optionally from -25 mV to -5 mV. As a result, this helps to further improve the uniformity of the areal density and thickness of the coating layer and the uniformity of the pores, thereby further improving the ion conductivity of the separator and energy density and cycle performance of the secondary battery. In some embodiments of the present application, a material that constitutes the three-dimensional skeleton structure includes one or more of organic rod-shaped substance and organic tubular substance. A suitable shape of the material is conducive to the better overlap of the three-dimensional skeleton structure and the filler, which enables the coating layer to have a more stable spatial network structure, thereby further improving the heat resistance and ion conductivity of the separator.

In some embodiments of the present application, a material that constitutes the three-dimensional skeleton structure includes one or more of nanocellulose, polytetrafluoroethylene nanofibers and polyamide nanofibers; optionally, the nanocellulose includes one or more of cellulose nanofibers, cellulose nanowhiskers and bacterial nanocellulose.

In some embodiments of the present application, a material that constitutes the three-dimensional skeleton structure includes nanocellulose, and the nanocellulose has hydroxyl group and anionic modifying group, optionally the anionic modifying group includes one or more of an amino group, a carboxyl group, a sulfonic acid group, a boric acid group, and a phosphoric acid group, and more optionally includes one or more of a sulfonic acid group, a boric acid group, and a phosphoric acid group. When the nanocellulose has the above-mentioned specific anionic modifying groups, it can ensure that the coating slurry has a suitable viscosity, which is more conducive to coating process, thereby improving the production efficiency of the separator; at the same time, it further helps the coating layer to have a suitable Zeta potential, which enables to further improve the uniformity of the areal density and thickness of the coating layer and the uniformity of the pores, thereby further improving the ion conductivity of the separator and energy density and cycle performance of the secondary battery.

In some embodiments of the present application, a molar ratio of the anionic modifying group to the hydroxyl group is from 1:4 to 4:1, optionally from 2:3 to 7:3. As a result, this can further improve the uniformity of the areal density and thickness of the coating layer and the uniformity of the pores, and improve the heat resistance, ion conductivity and electrolyte infiltration and retention characteristics of the separator.

In some embodiments of the present application, a material that constitutes the three-dimensional skeleton structure has an average diameter of ≤ 40 nm, optionally from 10 nm to 35 nm. As a result, this can further improve the ion conductivity of the separator and voltage breakdown resistance characteristics, and at the same time it also facilitates the overlap between the material that constitutes the three-dimensional skeleton structure and the filler to form an integrated effect, thereby further improving the heat resistance of the separator.

In some embodiments of the present application, a material that constitutes the three-dimensional skeleton structure has an average length of from 100 nm to 600 nm, optionally from 200 nm to 400 nm. As a result, this can further improve the heat resistance and ion conductivity of the separator.

In some embodiments of the present application, a material that constitutes the three-dimensional skeleton structure has an aspect ratio of from 5 to 60, optionally from 15 to 30. As a result, this can further improve the ion conductivity of the separator.

In some embodiments of the present application, the filler includes one or more of filler particles with primary particle morphology and filler particles with secondary particle morphology, optionally, the filler includes the filler particles with secondary particle morphology; further optionally, the filler includes the filler particles with primary particle morphology and filler particles with secondary particle morphology at the same time.

In some embodiments of the present application, the filler particles with primary particle morphology have an average particle diameter of from 200 nm to 800 nm, optionally from 200 nm to 400 nm.

In some embodiments of the present application, the filler particles with primary particle morphology have a BET specific surface area of ≤ 10 m²/g, optionally from 3 m²/g to 7 m²/g.

In some embodiments of the present application, the filler particles with primary particle morphology are present in an amount of ≤ 30 wt.%, optionally from 5 wt.% to 25 wt.%, based on the total weight of the coating layer.

The filler particles with primary particle morphology has a larger particle size, which can better exert its supporting role in the coating layer and reduce the shrinkage of the filler particles with secondary particle morphology, and reduce the amount of binder, thereby improving the heat resistance of the separator; and filler particles with primary particle morphology has a larger particle size, which also helps the separator to have more pore/channel structure and less moisture content when the filler particles with primary particle morphology are present in a relatively low amount, thereby further improving the ion conductivity and the electrolyte infiltration and retention characteristics of the separator.

In some embodiments of the present application, the filler particles with secondary particle morphology have an average particle diameter of ≤ 200 nm, optionally from 50 nm to 200 nm.

In some embodiments of the present application, the filler particles with secondary particle morphology have a BET specific surface area of ≥ 20 m²/g, optionally from 30 m²/g to 80 m²/g.

In some embodiments of the present application, the filler particles with secondary particle morphology are present in an amount of ≥ 60 wt.%, optionally from 70 wt.% to 90 wt.%, based on the total weight of the coating layer.

The filler particles with secondary particle morphology have the advantages of large specific surface area and good affinity with the three-dimensional skeleton structure, thus can better overlap with the three-dimensional skeleton structure, which results in the coating layer having a more stable spatial network structure. This can not only increase the number of ion conductivity channels of the separator, promote ion transport, but also improve the heat resistance and the electrolyte infiltration and retention characteristics of the separator. Therefore, the secondary battery using the separator of this application can have a long service life and good rate performance.

In some embodiments of the present application, the filler includes filler particles with primary particle morphology and filler particles with secondary particle morphology, and a mass ratio of filler particles with secondary particle morphology to filler particles with primary particle morphology is from 2:1 to 27:1, optionally from 5:1 to 15:1. As a result, it facilitates the coating layer to have spatial network structure with higher stability and better uniformity.

In some embodiments of the present application, the filler includes one or more of inorganic particles and organic particles. Optionally, the inorganic particles include one or more selected from inorganic particles with a dielectric constant of 5 or more, inorganic particles capable of transporting active ions and inorganic particles capable of undergoing electrochemical oxidation and reduction. Optionally, the organic particles include one or more selected from polystyrene, polyethylene, polyimide, melamine resin, phenolic resin, polypropylene, polyester, polyphenylene sulfide, polyaramid, polyamideimide, polyimide, copolymers of butyl acrylate and ethyl methacrylate, and mixtures thereof.

In some embodiments of the present application, the three-dimensional skeleton structure in the coating layer is present in an amount of from 6 wt.% to 35 wt.%, optionally from 10 wt.% to 30 wt.%, based on the total weight of the coating layer. As a result, it can ensure that the coating slurry has a suitable viscosity, which is more conducive to coating process; In addition, it is also beneficial to the overlap between the three-dimensional skeleton structure and the filler to form an integrated effect, thereby enabling the coating layer to have a more stable spatial network structure.

In some embodiments of the present application, a mass ratio of the three-dimensional skeleton structure to the filler is from 1:2 to 1:15.5, optionally from 1:5 to 1:10. As a result, this facilitates the coating layer to have a suitable Zata potential, which can further improve the uniformity of the areal density and thickness of the coating layer and the uniformity of the pores, thereby further improving the ion conductivity of the separator and energy density and cycle performance of the secondary battery.

In some embodiments of the present application, the coating layer further includes a non-granular binder. Optionally, the non-granular binder includes an aqueous solution-type binder.

In some embodiments of the present application, the non-granular binder in the coating layer is present in an amount of ≤ 2 wt.%, based on the total weight of the coating layer. The three-dimensional skeleton structure and the filler in the coating layer of the present application can overlap together to enable the coating layer to have a stable spatial network structure, thereby enabling the separator to maintain high adhesiveness under the premise of reducing the amount of binder.

In some embodiments of the present application, the porous substrate has a thickness of ≤ 6 µm, optionally from 3 µm to 5 nm. As a result, this contributes to improving the energy density of the secondary battery. In some embodiments of the present application, the coating layer has a thickness of ≤ 1 µm, optionally from 0.5 µm to 0.8 nm. As a result, this contributes to improving the energy density of the secondary battery. In some embodiments of the present application, the separator further includes an adhesive layer, the adhesive layer is disposed on at least part of surface of the coating layer, and the adhesive layer comprises a granular binder. Optionally, the granular binder includes one or more of acrylate monomer homopolymer or copolymer, acrylic monomer homopolymer or copolymer, fluorine-containing olefin monomer homopolymer or copolymer. The adhesive layer can not only prevent the coating layer from peeling off and improve the adhesiveness between the coating layer and the porous substrate and improve the safety performance of the secondary battery, but also improve the interface between the separator and the electrode and improve the cycle performance of the secondary battery.

In some embodiments of the present application, the separator has a longitudinal thermal shrinkage rate at 150°C for 1 h of ≤ 5%, optionally from 0.5% to 3%.

In some embodiments of the present application, the separator has a lateral thermal shrinkage rate at 150°C for 1 h of ≤ 5%, optionally from 0.5% to 3%.

In some embodiments of the present application, the separator has a longitudinal tensile strength of ≥ 2000 kg/cm², optionally from 2500 kg/m² to 4500 kg/m².

In some embodiments of the present application, the separator has a lateral tensile strength of ≥ 2000 kg/m², optionally from 2500 kg/m² to 4500 kg/m².

In some embodiments of the present application, the separator has a wetting length of ≥ 30 mm, optionally from 30 mm to 80 mm.

In some embodiments of the present application, the separator has a wetting speed of ≥ 3 mm/s, optionally from 3 mm/s to 10 mm/s.

In some embodiments of the present application, the separator has an air permeability of ≤ 300 s/100 mL, optionally from 100 s/100 mL to 230 s/100 mL.

When the properties of the separator satisfy one or more of the above conditions, it is beneficial to improving one or more of energy density, thermal safety performance, and service life of the secondary battery.

A second aspect of the present application provides a method for preparing the separator according to the first aspect of the present application, including the following steps: S1, providing porous substrate; S2, formulating a coating slurry: mixing a material that constitutes the three-dimensional skeleton structure and a filler in a predetermined proportion in a solvent to prepare the coating slurry; S3, coating: coating at least one surface of the porous substrate with the coating slurry to form a coating layer, and drying to obtain a separator, wherein the separator includes a porous substrate and a coating layer disposed on at least one surface of the porous substrate, and the coating layer includes a three-dimensional skeleton structure and a filler, and at least a portion of the filler is filled in the three-dimensional skeleton structure, and the coating layer has a Zeta potential of less than 0 mV. The Zeta potential of the coating layer is tested by the following method: stirring and mixing 30 g of coating material powder with 2000 g of deionized water to obtain a dispersion, and testing the Zeta potential of the obtained dispersion with a Zeta potentiometer, test result being the Zeta potential of the coating layer.

In some embodiments of the present application, the coating slurry has a pH of from 5 to 10, optionally from 6 to 9.

In some embodiments of the present application, the coating slurry has a static viscosity of 1000 mpa.s or lower.

In some embodiments of the present application, the coating slurry is obtained in the following manner: Step 1, formulating a nanocellulose solution: mixing the nanocellulose having an anionic modifying group with water to prepare into the nanocellulose solution, wherein the nanocellulose solution has a pH of between 5 and 9 and a Zeta potential of less than 0 mV; Step 2, formulating a filler solution having a pH of ≥ 7.5, a Zeta potential of less than 0 mV; Step 3, mixing: mixing the nanocellulose solution and the filler solution in a predetermined proportion to obtain a coating slurry, wherein the coating slurry has a Zeta potential of -5 mV or lower.

In some embodiments of the present application, the nanocellulose solution has a concentration of from 1 wt.% to 10 wt.%, optionally from 2 wt.% to 10 wt.%.

In some embodiments of the present application, the filler solution has a concentration of from 30 wt.% to 60 wt.%, optionally from 35 wt.% to 55 wt.%.

In some embodiments of the present application, the nanocellulose having an anionic modifying group is obtained in the following manner: mixing and reacting nanocellulose powder with a modification solution; and then washing and removing impurities to obtain cellulose nanowhiskers having an anionic modifying group; adjusting pH of the obtained scellulose nanowhiskers having an anionic modifying group to neutral; and grinding and cutting to obtain nanocellulose having an anionic modifying group. Optionally, the modification solution is an aqueous sulfuric acid solution, an aqueous boric acid solution, an aqueous phosphoric acid solution, an aqueous acetic acid solution or a urea solution in organic solvent.

In some embodiments of the present application, the filler solution is obtained in the following manner: mixing filler, water and a modifier to obtain a filler solution having a pH of ≥ 7.5 and a Zeta potential of less than 0 mV, and the modifier includes one or more selected from an alkali, an anionic surfactant and a nonionic surfactant.

In some embodiments of the present application, the alkali comprises one or more selected from KOH, NaOH, NaHCO₃, LiOH, NH₄OH, Mg(OH)₂ and Na₂CO₃.

In some embodiments of the present application, the anionic surfactant comprises one or more selected from a sulfonate anionic surfactant, a carboxylate anionic surfactant, a sulfate ester anionic surfactant and a phosphate ester anionic surfactant, and optionally comprises one or more selected from alkylbenzene sulfonate, C12-C20 alkyl sulfonate, sodium polyacrylate, ammonium polyacrylate, sodium hydroxyethyl sulfate and C12-C20 alkyl sodium sulfate.

In some embodiments of the present application, the nonionic surfactant comprises one or more selected from fluoroalkyl ethoxy alcohol ethers and fatty alcohol polyoxyethylene ethers.

In some embodiments of the present application, the method further includes the step of: S4, secondary coating: coating at least part of surface of the coating layer with a slurry containing a granular binder, and drying to form an adhesive layer.

The preparation method of the separator of the present application can provide a coating layer through one coating process, which greatly simplifies the production process of the separator.

A third aspect of the present application provides a secondary battery, including the separator of the first aspect of the present application or the separator prepared by the method of the second aspect of the present application.

A fourth aspect of the present application provides an electrical device, including the secondary battery according to the third aspect of the present application.

By disposing a coating layer including a three-dimensional skeleton structure and a filler on surface of porous substrate of the separator, and controlling the Zeta potential of the coating layer to be less than 0 mV, the present application enables the separator to have the combined characteristics of high heat resistance, high uniformity and good ion conductivity, thereby enabling the secondary battery to have the combined characteristics of high energy density, high thermal safety performance and long service life. The electrical device of the present application includes the secondary battery provided by the present application, and thus has at least the same advantages as the secondary battery.

### DESCRIPTION OF THE DRAWINGS

In order to explain the technical solutions of the embodiments of the present application more clearly, the following will briefly introduce the drawings that need to be used in the embodiments of the present application. Apparently, the drawings described below are only some embodiments of the present application. A person of ordinary skill in the art can obtain other drawings based on these drawings without creative work.
Fig. 1 is a schematic diagram of an embodiment of a secondary battery of the present application.
Fig. 2 is an exploded schematic diagram of the embodiment of the secondary battery as shown in Fig. 1.
Fig. 3 is a schematic diagram of a battery module according to an embodiment of the present application.
Fig. 4 is a schematic diagram of a battery pack according to an embodiment of the present application.
Fig. 5 is an exploded schematic diagram of the embodiment of the battery pack as shown in Fig. 4.
Fig. 6 is a schematic diagram of an embodiment of an electrical device of the present application as a powder supply.

In the drawings, the drawings are not necessarily drawn to scale. The reference numerals are defined as follows: 1- battery pack; 2- upper case body; 3-lower case body; 4-battery module; 5-secondary battery; 51-housing; 52-electrode assembly; and 53-cover.

### DETAILED DESCRIPTION

Hereafter, embodiments of the separator, the preparation method therefor and the secondary battery and electrical device related thereto of the present application will be specifically described in detail with appropriate references to the accompanying drawings. However, unnecessary detailed description may be omitted. For example, detailed descriptions of well-known items and repeated descriptions of substantially the same configurations may be omitted. This is to avoid the following description from becoming unnecessarily lengthy and to facilitate the understanding of those skilled in the art. In addition, the drawings and the following description are provided for those skilled in the art to fully understand the present application, and are not intended to limit the subject matter described in the claims.

A "range" disclosed herein is defined in terms of lower and upper limits, and a given range is defined by selecting a lower limit and an upper limit that define the boundaries of the particular range. Ranges defined in this manner may be inclusive or exclusive of end values and may be combined arbitrarily, that is, any lower limit may be combined with any upper limit to form a range. For example, if ranges of 60-120 and 80-110 are listed for a particular parameter, it is to be understood that ranges of 60-110 and 80-120 are also contemplated. Additionally, if the minimum range values 1 and 2 are listed, and the maximum range values 3, 4, and 5 are listed, the following ranges are all expected: 1-3, 1-4, 1-5, 2-3, 2-4 and 2-5. In the present application, unless stated otherwise, the numerical range "a-b" represents an abbreviated representation of any combination of real numbers between a and b, where both a and b are real numbers. For example, the numerical range "0-5" means that all real numbers between "0-5" have been listed herein, and the range "0-5" is just an abbreviated representation of the combination of these numerical values. In addition, when a parameter is expressed as an integer greater than or equal to 2, it is equivalent to disclose that the parameter is, for example, an integer of 2, 3, 4, 5, 6, 7, 8, 9, 10, 11, 12, and the like.

Unless stated otherwise, all the embodiments and the optional embodiments of the present application can be combined with each other to form a new technical solution, and such a technical solution should be considered to be included in the disclosure of the present application.

Unless stated otherwise, all technical features and optional technical features of the present application can be combined with each other to form a new technical solution, and such a technical solutions should be considered to be included in the disclosure of the present application.

Unless stated otherwise, all steps of the present application can be carried out sequentially, and also can be carried out randomly, preferably they are carried out sequentially. For example, the method includes steps (a) and (b), indicating that the method may include steps (a) and (b) performed in sequence, or that the method may include steps (b) and (a) performed in sequence. For example, reference to the method further comprising step (c) indicates that step (c) may be added to the method in any order. As an example, the method may comprises steps (a), (b) and (c), steps (a), (c) and (b), or steps (c), (a) and (b), and the like.

Unless stated otherwise, the transition phases "comprising" and "including" mentioned in the present application means that it is drafted in an open mode or in a close mode. For example, the transition phases "comprising" and "including" may mean that other components not listed may also be included or contained, or only the listed components may be included or contained.

**In** the present application herein, unless otherwise stated, the term "or" is inclusive. For example, the phrase "A or B" means "A, B, or both A and B." More specifically, any of the following conditions satisfy the condition "A or B": A is true (or exists) and B is false (or does not exist); A is false (or does not exist) and B is true (or exists); or both A and B are true (or exist).

**In** this application, the terms "plurality" and "multiple" and "several" refer to two or more.

Unless otherwise specified, the terms used in this application have the well-known meanings generally understood by those skilled in the art.

Unless otherwise specified, a numerical value for each parameter mentioned in the present application can be determined by various test methods commonly used in the art, for example, can be determined according to the test methods given in the Examples of the present application.

Normally, a secondary battery comprises an electrode assembly and an electrolyte, and the electrode assembly comprises a positive electrode plate, a negative electrode plate and a separator, the separator is disposed between the positive electrode plate and the negative electrode plate and is mainly used to prevent short circuit between positive electrode and negative electrode and meanwhile allows active ions to pass through to form a circuit.

With the application and promotion of secondary batteries, the requirements for energy density and service life of secondary battery are getting higher and higher. To obtain a thinner separator is an effective measure to increase energy density of secondary batteries. Currently, the separators used in commercial secondary batteries are usually polyolefin porous films, such as polyethylene porous films, polypropylene porous films or polypropylene/polyethylene/polypropylene three-layer composite films, with melting points between 130°C and 160°C. As a result, when the thickness of the separator is reduced, the heat resistance of the separator will deteriorate, and a significant thermal shrinkage effect will occur when the separator is heated, which causes direct contact between the positive and negative electrodes inside the battery, thereby resulting in internal short circuits and increasing the safety risk of secondary batteries.

In order to solve the above problems, the current measures are mainly to apply a heat-resistant inorganic ceramic layer on the polyolefin porous film, which can increase the mechanical strength of the separator, reduce the shrinkage of the separator when heated, and reduce the risk of short circuit between positive electrode and negative electrode inside the batteries. However, commercially available inorganic ceramic particles have relatively large particle size, thus will increase the overall thickness of the separator, resulting in the inability to balance the energy density of secondary batteries, especially in the field of power batteries, which is not conducive to increasing the cruising range. In addition, due to the relatively large particle size of inorganic ceramic particles, the number of layers laminated on the polyolefin porous film is reduced (usually ≤ 5 layers), which results in limited improvement in the heat resistance of the separator. Nanosizing inorganic ceramic particles can reduce the thickness of the coating layer and alleviate the adverse impact on the energy density of secondary batteries. However, the coating layer formed by nanosized inorganic ceramic particles has low porosity and will easily block the polyolefin porous film, thus leading to the reduction of overall porosity of the separator and an increase of the ion impedance of the separator and an obstruction of ion transport, which in turn leads to a deterioration in the capacity exertion and kinetic performance of the secondary battery. Meanwhile, due to the high specific surface area of nanosized inorganic ceramic particles and the contact between particles being point contact, a large amount of binder is required to ensure the adhesiveness between particles, whereas the large amount of binder will lead to the problem of blocking pores, which is detrimental to the rate performance of the secondary battery, for example, the easy formation of dendrites on the surface of the negative electrode, which is in turn further detrimental to the capacity exertion and energy density and service life of secondary battery.

In addition, the polyolefin porous film is a hydrophobic material, whereas the inorganic ceramic particles are hydrophilic materials. Therefore, when the inorganic ceramic slurry is applied on the surface of the polyolefin porous film, there will be problems such as missing coating and poor uniformity, thus affecting the uniformity of the separator and further affecting the capacity exertion and kinetic performance of secondary battery.

Therefore, the separator in the existing art often struggle to have the combined characteristics of high energy density, high thermal safety performance, and long service life of secondary battery.

The inventors of the present application have unexpectedly found during the research that by disposing a coating layer comprising a three-dimensional skeleton structure and a filler on surface of porous substrate of the separator, and controlling the Zeta potential of the coating layer in a suitable range, the separator can have the combined characteristics of high heat resistance, high uniformity and good ion conductivity, thereby enabling the secondary battery to have the combined characteristics of high energy density, high thermal safety performance and long service life.

### Separator

Specifically, the first aspect of embodiments of the present application provides a separator, comprising a porous substrate and a coating layer disposed on one or more surface of the porous substrate, wherein the coating layer comprises a three-dimensional skeleton structure and a filler, and at least a portion of the filler is filled in the three-dimensional skeleton structure, and the coating layer has a Zeta potential of less than 0 mV.

The Zeta potential of the coating layer is tested by the following method: stirring and mixing 30 g of coating material powder with 2000 g of deionized water to obtain a dispersion, and testing the Zeta potential of the obtained dispersion with a Zeta potentiometer, test result being the Zeta potential of the coating layer.

The coating material powder can be obtained by a sampling way of scraping powder (e.g. scraping powder with a blade), and the scraping powder depth does not exceed the boundary zone between the coating layer and the porous substrate. The dispersion may be obtained after sufficient stirring by a stirrer with a toothed disk, and the stirring time may be from 1 hour to 3 hours, and the stirring speed may be from 1500 r/min to 3000 r/min.

As the Zeta potentiometer, Zetasizer series nanoparticle size potentiometer from Malvern, such as the Zetasizer Advance nanoparticle size potentiometer, may be used, and DTS1070 Zeta potential capillary sample cell from Malvern may be used as a sample cell. Specifically, the obtained dispersion may be placed in a Malvern DTS1070 Zeta potential capillary sample cell for testing, and then the Zeta potential of the obtained dispersion may be tested by ZS Xplorer software. GB/T 32671.2-2019 and ISO 13099-2-2012 may be referred to as test standards. In order to ensure the accuracy of the test results, a plurality of samples (for example, 5 or more) can be taken during the test, and the average value may be obtained.

The inventors of the present application have unexpectedly found through a lot of researches that bydisposing a coating layer comprising a three-dimensional skeleton structure and a filler on surface of porous substrate of the separator, and controlling the Zeta potential of the coating layer to be less than 0 mV, the separator can have the combined characteristics of high heat resistance, high uniformity and good ion conductivity, thereby enabling the secondary battery to have the combined characteristics of high energy density, high thermal safety performance and long service life.

Although the mechanism is not very clear, the inventors of the present application anticipate the possible reasons including the following points.

First, when the Zeta potential of the coating layer is within the suitable range, the coating slurry has a good dispersibility, thus after the coating slurry is dried, a coating layer with good uniformity of areal density and thickness can be formed, thereby improving the heat resistance of the separator, and at the same time the coating layer has uniform pore distribution, which ensures good ion conductivity of the coating layer, thereby improving the rate performance, thermal safety performance and cycle performance of the secondary battery.

Second, t least a portion of the filler is filled in the three-dimensional skeleton structure, which helps the filler and the three-dimensional skeleton structure to form an embedding effect, thereby not only increasing the heat resistance of the separator, reducing the shrinkage of the separator when heated, reducing the risk of short circuit between the positive electrode and the negative electrode, resulting in high thermal safety performance of the secondary battery, but also maintaining high bonding strength between the coating layer and the porous substrate, preventing the filler from falling off during the long-term charge and discharge of the secondary battery.

Third, at least a portion of the filler is filled in the three-dimensional skeleton structure, whereby the filler can further be overlapped with the three-dimensional skeleton structure, which enables the coating layer to have a stable spatial network structure, thereby not only increasing the number of ion conduction channels of the separator and promoting ion transport, but also improving the infiltration and retention characteristics of the separator to the electrolyte and further enabling the secondary battery using the separator of the present application to have a long service life.

Fourth, since the coating layer of the present application has high heat resistance, thus thinner porous substrates can be used and the secondary battery comprising the separator of the present application can further have high energy density.

In some embodiments, the coating layer may have a Zeta potential of from -50 mV to -5 mV, optionally from -25 mV to -5 mV, more optionally from -15 mV to -6 mV. As a result, this helps to further improve the uniformity of the areal density and thickness of the coating layer and the uniformity of the pores, thereby further improving the ion conductivity of the separator and energy density and cycle performance of the secondary battery. In addition, it can effectively avoid the following situations: when the Zeta potential of the coating layer is too low, the coating slurry may have too high viscosity and too poor fluidity, which may affect the application of the coating slurry and thus the uniformity of area density and thickness of the coating layer and uniformity of pores.

In some embodiments, a material that constitutes the three-dimensional skeleton structure may comprise one or more of organic rod-shaped substance and organic tubular substance. A suitable shape of the material is conducive to the better overlap of the three-dimensional skeleton structure and the filler, which enables the coating layer to have a more stable spatial network structure, thereby further improving the heat resistance and ion conductivity of the separator.

In some embodiments, a material that constitutes the three-dimensional skeleton structure may comprise one or more of nanocellulose, polytetrafluoroethylene nanofibers and polyamide nanofibers.

In some embodiments, a material that constitutes the three-dimensional skeleton structure may comprise nanocellulose. Optionally, the nanocellulose comprises one or more of cellulose nanofibers (CNF, also referred to as nanofibril cellulose or microfibril cellulose), cellulose nanowhiskers (CNC, also referred to as cellulose nanocrystals, nanocrystalline cellulose), and bacterial nanocellulose (BNC, also referred to as bacterial cellulose or microbial cellulose). Optionally, the nanocellulose comprises cellulose nanowhiskers, which have the advantage of high crystallinity, thereby enabling better improvement of heat resistance of the separator.

Nanocellulose is a general term for cellulose with any one dimensional size of nano-scale (e.g., 100 nm or lower), and has the properties of both cellulose and nano-particles. Nanocellulose may be a polymer nanomaterial extracted from wood, cotton, and other materials in nature through one or more means in chemistry, physics, biology, etc. It has the advantages of wide sources, low cost, biodegradability, high modulus and high specific surface area, so it is an excellent substitute for traditional petrochemical resources and can effectively alleviate environmental pollution and shortage of petrochemical resources. In some embodiments, the nanocellulose may have hydroxyl group and anionic modifying group, optionally the anionic modifying group comprises one or more of an amino group, a carboxyl group, a sulfonic acid group, a boric acid group, and a phosphoric acid group, and more optionally comprises one or more of a sulfonic acid group, a boric acid group, and a phosphoric acid group.

In further research, the inventors have found that when the nanocellulose has the above-mentioned specific anionic modifying groups, it can ensure that the coating slurry has a suitable viscosity, which is more conducive to coating process, thereby improving the production efficiency of the separator; at the same time, it further helps the coating layer to have a suitable Zeta potential, which enables to further improve the uniformity of the areal density and thickness of the coating layer and the uniformity of the pores, thereby further improving the ion conductivity of the separator and energy density and cycle performance of the secondary battery.

When the nanocellulose has the above-mentioned specific anionic modifying group, the heat resistance of the separator and the bonding strength between the coating layer and the porous substrate can also be effectively improved.

When the nanocellulose has the above-mentioned specific anionic modifying groups, it also facilitates the overlap between the nanocellulose and the filler, which enables the coating layer to have a more stable spatial network structure; and it improves the electrolyte infiltration and retention characteristics of the separator, thus further improves ion conductivity and voltage breakdown resistance properties of the separator, thereby being beneficial to matching with the high-voltage positive electrode active materials and further improving the energy density of the secondary battery.

In some embodiments, a molar ratio of the anionic modifying group to the hydroxyl group may be from 1:4 to 4:1, optionally from 2:3 to 7:3. When the molar ratio of the anionic modifying group to the hydroxyl group is within the suitable ranges, this can further improve the uniformity of the areal density and thickness of the coating layer and the uniformity of the pores, and improve the heat resistance, ion conductivity and electrolyte infiltration and retention characteristics of the separator. In addition, it can effectively avoid the following situations: when the molar ratio of the anionic modifying group to the hydroxyl group is too small, the further improvement effect of the anionic modifying group on the uniformity of the areal density and thickness of the coating layer and the uniformity of the pores may not be apparent; when the molar ratio of anionic modifying group to hydroxyl group is too high, the electrolyte infiltration and retention characteristics of the separator may deteriorate, which may affect the cycle performance and safety performance of the secondary battery and may also lead to the decline of the heat resistance of the separator, and may further affect the thermal safety performance of the secondary battery.

The types of anionic modifying group in nanocellulose may be determined by infrared spectroscopy. For example, the infrared spectrum may be used for testing a material by determining the characteristic peaks therein, thereby determining the types of anionic modifying group. Specifically, instruments and methods known in the field, for example an infrared spectrometer (such as IS10 Fourier transform infrared spectrometers Company in the United States), may be used for performing an analysis of infrared spectrum of a material according to GB/T 6040-2019 General Rules for Infrared Spectroscopy Analysis.

In some embodiments, a material that constitutes the three-dimensional skeleton structure may have an average diameter of ≤ 40 nm, optionally from 10 nm to 35 nm. When the average diameter of a material that constitutes the three-dimensional skeleton structure is within the suitable ranges, it can further improve the ion conductivity of the separator and voltage breakdown resistance characteristics, and at the same time it also facilitates the overlap between the material that constitutes the three-dimensional skeleton structure and the filler to form an integrated effect, thereby further improving the heat resistance of the separator. In addition, it can effectively avoid the following situations: when the average diameter of a material that constitutes the three-dimensional skeleton structure is too high, the intertwining effect of the three-dimensional skeleton structure formed therefrom is insufficient and the pores are relatively large, which may lead to insufficient voltage breakdown resistance characteristics of the separator.

In some embodiments, a material that constitutes the three-dimensional skeleton structure may have an average length of from 100 nm 600 nm, optionally from 200 nm to 400 nm. When the average length of the material that constitutes the three-dimensional skeleton structure is in the appropriate ranges, the heat resistance and ion conductivity of the separator may be further improved. In addition, it can effectively avoid the following situations: when the average length of the material that constitutes the three-dimensional skeleton structure is too low, the overlap effect between the material and the filler is poor, the heat resistance of the coating layer may become worse , and during the drying process of the coating layer, part of the three-dimensional skeleton structure is easy to collapse due to the lack of support of fillers, which may be easy to block the micropores of the porous substrate and hinder ion transport and moisture discharge, and thus may also affect the cycle performance and rate performance of the secondary battery; When the average length of the material that constitutes the three-dimensional skeleton structure is too high, the coating slurry has high viscosity and poor dispersibility, thus the uniformity of the pores and the uniformity of the areal density and thickness of the coating layer formed after drying of the coating slurry may become worse.

In some embodiments, a material that constitutes the three-dimensional skeleton structure may have an aspect ratio of from 5 to 60, optionally from 15 to 30. When the aspect ratio of the material that constitutes the three-dimensional skeleton structure is in the appropriate ranges, the ion conductivity of the separator may be further improved. In addition, it can effectively avoid the following situations: when the aspect ratio of the material that constitutes the three-dimensional skeleton structure is too low, the overlap effect between the material and the filler is poor, the heat resistance of the coating layer may become worse , and during the drying process of the coating layer, part of the three-dimensional skeleton structure is easy to collapse due to the lack of support of fillers, which may be easy to block the micropores of the porous substrate and hinder ion transport and moisture discharge, and thus may also affect the cycle performance and rate performance of the secondary battery; When the aspect ratio of the material that constitutes the three-dimensional skeleton structure is too high, the three-dimensional skeleton structure as formed has relative small pores, thus the ion conductivity of the separator may become worse.

The average length and average diameter of the material that constitutes the three-dimensional skeleton structure may be measured by the following method: cutting a sample of 3.6 mm × 3.6 mm from any area of the separator, mapping the micro-morphology and structure of the coating layer in the sample by scanning electron microscope (such as ZEISS Sigma 300) using high vacuum mode and a working voltage of 3kV and magnification of 30,000 times, to obtain SEM images; selecting several (for example, 5 or more) test areas for statistically recording lengths according to the obtained SEM images, with each test area having a size of 0.5 µm × 0.5 µm, and then taking the average of the lengths obtained from individual test areas as the average length of the material that constitutes the three-dimensional skeleton structure; selecting several (for example, 5 or more) test areas for statistically recording diameters using Nano Measurer particle size distribution statistics software according to the obtained SEM images, with each test area having a size of 0.5 µm × 0.5 µm, and then taking the average of the diameters obtained from individual test areas as the average diameter of the material that constitutes the three-dimensional skeleton structure.

In some embodiments, the three-dimensional skeleton structure in the coating layer may be present in an amount of from 6 wt.% to 35 wt.%, optionally from 10 wt.% to 30 wt.%, based on the total weight of the coating layer. When the amount of the three-dimensional skeleton structure is within the suitable ranges, it can ensure that the coating slurry has a suitable viscosity, which is more conducive to coating process; In addition, it is also beneficial to the overlap between the three-dimensional skeleton structure and the filler to form an integrated effect, which enables the coating layer to have a more stable spatial network structure, thereby further improving the ion conductivity, electrolyte infiltration and retention characteristics and the voltage breakdown resistance of the separator.

During the long-term charging and discharging of the secondary battery, the volume of the whole battery will increase due to the irreversible changes of microstructure of the positive electrode active materials and negative electrode active materials. Especially, when the secondary battery is charged rapidly, the increase of the volume of the negative electrode active materials is higher after the intercalation of active ions. After the expansion of the battery, the separator will be squeezed and/or stretched, which will easily lead to the damage of the separator and thus increase the risk of short circuit between positive electrode and negative electrode. Therefore, the separator is also required to have good external force extrusion resistance. At least a portion of the filler being filled in the three-dimensional skeleton structure helps the coating layer to have a stable spatial network structure, which may improve the ion conductivity and heat resistance of the separator; In addition, it may also improve the tensile strength, puncture resistance and external force extrusion resistance of the separator.

In some embodiments, the filler may comprise one or more of filler particles with primary particle morphology and filler particles with secondary particle morphology, optionally, the filler comprises the filler particles with secondary particle morphology; further optionally, the filler comprises the filler particles with primary particle morphology and filler particles with secondary particle morphology at the same time. The filler particles with secondary particle morphology have the advantages of large specific surface area and good affinity with the three-dimensional skeleton structure, thus can better overlap with the three-dimensional skeleton structure, which results in the coating layer having a more stable spatial network structure. This can not only increase the number of ion conductivity channels of the separator, promote ion transport, but also improve the heat resistance and the electrolyte infiltration and retention characteristics of the separator. Therefore, the secondary battery using the separator of this application can have a long service life and good rate performance. The filler particles with primary particle morphology has a larger particle size, which can better exert its supporting role in the coating layer and reduce the shrinkage of the filler particles with secondary particle morphology, and reduce the amount of binder, thereby improving the heat resistance of the separator; and filler particles with primary particle morphology has a larger particle size, which also helps the separator to have more pore/channel structure and less moisture content when the filler particles with primary particle morphology are present in a relatively low amount, thereby further improving the ion conductivity and the electrolyte infiltration and retention characteristics of the separator.

In some embodiments, the filler comprises filler particles with primary particle morphology and filler particles with secondary particle morphology, and a mass ratio of filler particles with secondary particle morphology to filler particles with primary particle morphology is from 2:1 to 27:1, optionally from 5:1 to 15:1. As a result, it facilitates the coating layer to have spatial network structure with higher stability and better uniformity.

In some embodiments, the filler particles with primary particle morphology have an average particle diameter of from 200 nm to 800 nm, optionally from 200 nm to 400 nm. As a result, the filler particles with primary particle morphology can better exert the supporting role, so that the coating layer maintains a stable pore/channel structure during long-term charge and discharge, which is beneficial to ion transport.

In some embodiments, the filler particles with primary particle morphology may have a BET specific surface area of ≤ 10 m²/g, optionally from 3 m²/g to 7 m²/g. As a result, the filler particles with primary particle morphology can better exert the supporting role, so that the coating layer maintains a stable pore/channel structure during long-term charge and discharge, which is beneficial to ion transport.

In some embodiments, the filler particles with primary particle morphology may be present in an amount of ≤ 30 wt.%, optionally from 5 wt.% to 25 wt.%, based on the total weight of the coating layer. As a result, the filler particles with primary particle morphology can better exert the supporting role, so that the coating layer maintains a stable pore/channel structure during long-term charge and discharge, which is beneficial to ion transport.

In some embodiments, the filler particles with secondary particle morphology may have an average particle diameter of ≤ 200 nm, optionally from 50 nm to 200 nm. As a result, the filler particles with secondary particle morphology have a relatively large specific surface area, which can improve affinity between the filler and the three-dimensional skeleton structure and thus the filler can better overlap with the three-dimensional skeleton structure and thus the coating layer can have a more stable spatial network structure, thereby resulting in the separator having better heat resistance, ion conductivity, and electrolyte infiltration and retention characteristics.

In some embodiments, the filler particles with secondary particle morphology may have a BET specific surface area of ≥ 20 m²/g, optionally from 30 m²/g to 80 m²/g. As a result, the filler has better affinity with the three-dimensional skeleton structure, thus the coating layer can have a more stable spatial network structure, thereby resulting in the separator having better heat resistance, ion conductivity, and electrolyte infiltration and retention characteristics.

In some embodiments, the filler particles with secondary particle morphology may be present in an amount of ≥ 60 wt.%, optionally from 70 wt.% to 90 wt.%, based on the total weight of the coating layer. As a result, this can ensure that the coating slurry has appropriate viscosity, which is more conducive to coating process; In addition, it is also beneficial to better overlap between the filler and the three-dimensional skeleton structure, which results in a coating layer having a more stable spatial network structure, thereby further improving the tensile strength, puncture resistance, and external compression resistance of the separator.

In some embodiments, the filler comprises one or more of inorganic particles and organic particles.

In some embodiments, inorganic particles may comprise one or more selected from inorganic particles with a dielectric constant of 5 or more, inorganic particles capable of transporting active ions and inorganic particles capable of undergoing electrochemical oxidation and reduction.

In some embodiments, inorganic particles with a dielectric constant of 5 or more may comprise one or more selected from boehmite (γ-AlOOH), aluminum oxide (Al₂O₃), barium sulfate (BaSO₄), magnesium oxide (MgO), magnesium hydroxide (Mg(OH)₂), silicon oxide SiOₓ (0<x ≤ 2), tin dioxide (SnO₂), titanium oxide (TiO₂), calcium oxide (CaO), zinc oxide (ZnO), zirconium oxide (ZrO₂), yttrium oxide (Y₂O₃), nickel oxide (NiO), hafnium dioxide (HfO₂), cerium oxide (CeO₂), zirconium titanate (ZrTiO₃), barium titanate (BaTiO₃), magnesium fluoride (MgF₂), Pb (Zr,Ti) O₃ (abbreviated as PZT), Pb₁₋ₘLaₘZr₁₋ₙTiₙO₃ (abbreviated as PLZT, 0<m<1, 0<n<1), and Pb(Mg₃Nb_{2/3})O₃-PbTiO₃ (abbreviated as PMN-PT).

In some embodiments, inorganic particles capable of transporting active ions may comprise one or more selected from lithium phosphate (Li₃PO₄), lithium titanium phosphate (LiₓTi_{y}(PO₄)₃, 0<x<2, 0<y<3), lithium aluminum titanium phosphate (LiₓAl_{y}Ti_{z}(PO₄)₃, 0<x<2, 0<y<1, 0<z<3), (LiAlTiP)ₓO_{y} type glass (0<x<4 , 0<y<13), lithium lanthanum titanate (LiₓLa_{y}TiO₃, 0<x<2, 0<y<3), lithium germanium thiophosphate (LiₓGe_{y}P_{z}S_{w}, 0<x<4, 0<y<1, 0<z<1, 0<w<5), lithium nitride (LiₓN_{y}, 0<x<4, 0<y<2), SiS₂ glass (LiₓSi_{y}S_{z}, 0<x<3, 0<y<2, 0<z<4), and P₂S₅ glass (LiₓP_{y}S_{z}, 0<x<3, 0<y<3, 0<z<7).

In some embodiments, the inorganic particles capable of undergoing electrochemical oxidation and reduction may comprise one or more selected from lithium-containing transition metal oxides, olivine structure lithium-containing phosphates, carbon-based materials, silicon-based materials, tin-based materials, and lithium-titanium compounds.

In some embodiments, the organic particles may comprise one or more selected from polystyrene, polyethylene, polyimide, melamine resin, phenolic resin, polypropylene, polyester (such as polyethylene terephthalate, polyethylene naphthalate, polybutylene terephthalate), polyphenylene sulfide, polyarylamide, polyamide imide, polyimide, copolymers of butyl acrylate and ethyl methacrylate, and mixtures thereof.

In some embodiments, a mass ratio of the three-dimensional skeleton structure to the filler may be from 1:2 to 1:15.5, optionally from 1:5 to 1:10. As a result, this facilitates the coating layer to have a suitable Zata potential, which can further improve the uniformity of the areal density and thickness of the coating layer and the uniformity of the pores, thereby further improving the ion conductivity of the separator and energy density and cycle performance of the secondary battery.

In some embodiments, the coating layer may further comprise a non-granular binder. The type of the non-granular binder is not particularly limited in the present application, and any well-known material having good adhesiveness can be selected. Optionally, the non-granular binder comprises an aqueous solution-type binder, which has the advantages of good thermodynamic stability and environmental protection, thereby facilitating the preparation and application of the coating slurry. As an example, the aqueous solution-type binder may comprise one or more of an aqueous solution-type acrylic resin (for example, acrylic acid, methacrylic acid, sodium acrylate monomer homopolymer or copolymer with other comonomers), polyvinyl alcohol (PVA), isobutylene-maleic anhydride copolymer, and polyacrylamide.

Optionally, the non-granular binder in the coating layer is present in an amount of ≤ 2 wt.%, based on the total weight of the coating layer. The three-dimensional skeleton structure and the filler in the coating layer of the present application can overlap together to enable the coating layer to have a stable spatial network structure, thereby enabling the separator to maintain high adhesiveness under the premise of reducing the amount of binder.

In some embodiments, the coating layer may have a thickness of ≤ 1 µm, optionally from 0.5 µm to 0.8 nm. As a result, this contributes to improving the energy density of the secondary battery. In the present application, the thickness of the coating layer refers to the thickness of the coating layer on one side of the porous substrate.

In some embodiments, the porous substrate may have a thickness of ≤ 6 µm, optionally from 3 µm to 5 nm. The coating layer of the present application may significantly improve the heat resistance of the separator, so that a thinner porous substrate can be used, thus contributing to improving the energy density of the secondary battery.

The material of the porous substrate is not specially limited in the present application, and the porous substrate may be any known substrate with good chemical and mechanical stability; for example, the porous substrate may include one or more of a porous polyolefin-based resin film (e.g. one or more of polyethylene, polypropylene, and polyvinylidene fluoride), a porous glass fiber, and a porous non-woven fabric. The porous substrate may be a single-layer film or a multilayer film. When the porous substrate is a multilayer composite film, the materials of individual layers may be the same or different.

In some embodiments, the separator may further comprise an adhesive layer, the adhesive layer is disposed on at least part of surface of the coating layer, and the adhesive layer comprises a granular binder. The adhesive layer can not only prevent the coating layer from peeling off and improve the adhesiveness between the coating layer and the porous substrate and improve the safety performance of the secondary battery, but also improve the interface between the separator and the electrode and improve the cycle performance of the secondary battery.

Optionally, the granular binder comprises one or more of acrylate monomer homopolymer or copolymer, acrylic monomer homopolymer or copolymer, fluorine-containing olefin monomer homopolymer or copolymer. The comonomer includes, but is not limited to, one or more of an acrylate monomer, an acrylic monomer, an olefin monomer, a halogen-containing olefin monomer, a fluoroether monomer, and the like.

Optionally, the granular binder comprises a vinylidene fluoride-based polymer, such as a homopolymer of vinylidene fluoride monomer (VDF) and/or a copolymer of vinylidene fluoride monomer and a comonomer.

The comonomer may be one or more of an olefin monomer, a fluorine-containing olefin monomer, a chlorine-containing olefin monomer, an acrylate monomer, an acrylic monomer, and a fluoroether monomer. Optionally, the comonomer may comprise one or more of trifluoroethylene (VF3), chlorotrifluoroethylene (CTFE), 1,2-difluoroethylene, tetrafluoroethylene (TFE), hexafluoropropylene (HFP), perfluoro(alkylvinyl) ethers such as perfluoro(methylvinyl) ether (PMVE), perfluoro(ethylvinyl) ether (PEVE), perfluoro(propylvinyl) ether (PPVE), perfluoro(1,3-dioxole), and perfluoro(2,2-dimethyl-1,3-dioxole) (PDD).

In some embodiments, the separator has a longitudinal thermal shrinkage rate at 150°C for 1 h of ≤ 5%, optionally from 0.5% to 3%.

In some embodiments, the separator has a lateral thermal shrinkage rate at 150°C for 1 h of ≤ 5%, optionally from 0.5% to 3%.

The separator of the present application has low thermal shrinkage rate in both the lateral direction and the longitudinal direction at high temperature of 150°C, which can improve the safety performance of the secondary battery.

In some embodiments, the separator has a longitudinal tensile strength of ≥ 2000 kg/cm², optionally from 2500 kg/m² to 4500 kg/m².

In some embodiments, the separator has a lateral tensile strength of ≥ 2000 kg/m², optionally from 2500 kg/m² to 4500 kg/m².

The separator of the present application has high tensile strength in both the lateral direction and the longitudinal direction, which results in small probability of breakage of the separator when the secondary battery is expanded, thereby improving the safety performance of the secondary battery.

In some embodiments, the separator has a wetting length of ≥ 30 mm, optionally from 30 mm to 80 mm. In some embodiments, the separator has a wetting speed of ≥ 3 mm/s, optionally from 3 mm/s to 10 mm/s. The separator of the present application has good electrolyte infiltration and retention characteristics, which can improve the ion conductivity of the separator and the capacity exertion of the secondary battery.

In some embodiments, the separator has an air permeability of ≤ 300 s/100 mL, optionally from 100 s/100 mL to 230 s/100 mL. The separator of the present application has good air permeability, which can improve the ion conductivity of the separator and the capacity exertion of the secondary battery.

In this application, the average particle size or average particle diameter of a material has well-known meaning in the art, and may be measured with known instruments and methods in the art. For example, it can be determined by testing a material or separator using scanning electron microscopy, transmission electron microscopy, particle size distribution instrument to obtain a picture, randomly selecting a plurality of (for example, 10 or more) test particles from the picture, and recording the average value of the shortest diagonal length of the particles as the average particle size.

In this application, the specific surface area of a material has well-known meaning in the art, and may be measured with known instruments and methods in the art. For example, a method for analyzing and testing specific surface area by nitrogen adsorption is used according to GB/T 19587-2017, and the specific surface area can be calculated by the BET (Brunauer Emmett Teller) method. Optionally, the analyzing and testing specific surface area by nitrogen adsorption may be performd by a Tri-Star Model 3020 specific surface area & porosity analyzer from Micromeritics, USA.

In the present application, the thermal shrinkage rate, tensile strength, and air permeability of the separator have well-known meanings in the art and can be measured by methods known in the art. For example, they may be tested with reference to GB/T 36363-2018.

In this application, the wetting length and wetting speed of the separator have well-known meanings in the art, and may be measured with known instruments and methods in the art. An exemplary test method is as follows: cutting a separator into a sample with a width of 5 mm and a length of 100 mm, and fixing both ends of the sample and placing horizontally; Taking 0.5 mg of electrolyte and dropping it in the center of the sample, and after the specified time (1 min in this application), taking a photo and measuring the length of electrolyte diffusion, thereby obtaining the wetting length and wetting speed of the separator. In order to ensure the accuracy of the test results, a plurality of samples (for example, from 5 to 10) can be tested, and the test results are obtained by calculating average value. The electrolyte may be prepared by mixing ethylene carbonate (EC), ethyl methyl carbonate (EMC), and diethyl carbonate (DEC) in a volume ratio of 30:50:20 to obtain an organic solvent, and then dissolving a fully dried LiPF₆ in the above organic solvent, to prepare an electrolyte with a concentration of 1 mol/L.

It should be noted that the parameters (for example, thickness, etc.) of coating layer in the above separator are all parameters of coating layer on one side of the porous substrate. When the coating layer is disposed on both sides of the porous substrate, if the coating parameters on either side satisfy the requirements in the present application, the separator is considered to fall within the scope of protection of the present application.

### Preparation methods

A second aspect of embodiments of the present application provides a method for preparing the separator according to the first aspect of embodiments of the present application, comprising the following steps: S1, providing porous substrate; S2, formulating a coating slurry: mixing a material that constitutes the three-dimensional skeleton structure and a filler in a predetermined proportion in a solvent to prepare the coating slurry; S3, coating: coating at least one surface of the porous substrate with the coating slurry to form a coating layer, and drying to obtain a separator, wherein the separator comprises a porous substrate and a coating layer disposed on at least one surface of the porous substrate, and the coating layer comprises a three-dimensional skeleton structure and a filler, and at least a portion of the filler is filled in the three-dimensional skeleton structure, and the coating layer has a Zeta potential of less than 0 mV.

In some embodiments, in S2, the solvent may be water, such as deionized water.

In some embodiments, in S2, the slurry may further comprise other components, for example, may further comprise a dispersing agent, a wetting agent, a binder, and the like.

In some embodiments, in S2, the material that constitutes the three-dimensional skeleton structure comprises nanocellulose, and the nanocellulose comprises hydroxyl group and anionic modifying group, and optionally the anionic modifying groups comprise one or more of an amine group, a carboxyl group, a sulfonic acid group, a boric acid group, and a phosphoric acid group, and more optionally comprise one or more of a sulfonic acid group, a boric acid group, and a phosphoric acid group.

Optionally, the nanocellulose is cellulose nanocrystals (CNC, also referred to as cellulose nanowhiskers, nanocrystalline cellulose).

In some embodiments, in S2, the coating slurry may be obtained in the following manner: Step 1, formulating a nanocellulose solution: mixing the nanocellulose having an anionic modifying group with water to prepare into the nanocellulose solution, wherein the nanocellulose solution has a pH of between 5 and 9 and a Zeta potential of less than 0 mV; Step 2, formulating a filler solution having a pH of ≥ 7.5, a Zeta potential of less than 0 mV; Step 3, mixing: mixing the nanocellulose solution and the filler solution in a predetermined proportion to obtain a coating slurry, wherein the coating slurry has a Zeta potential of -5 mV or lower.

In some embodiments, in Step 1, the nanocellulose having an anionic modifying group may be obtained in the following manner: mixing and reacting nanocellulose powder with a modification solution; and then washing and removing impurities to obtain cellulose nanowhiskers having an anionic modifying group; adjusting pH of the obtained scellulose nanowhiskers having an anionic modifying group to neutral (for example pH of between 6.5 and 7.5); and grinding and cutting to obtain nanocellulose having an anionic modifying group.

In some embodiments, the nanocellulose powder may have an whiteness of ≥ 80%. The cellulose powder can be obtained commercially, or can be obtained by a chemical method (e.g., acid hydrolysis method, alkali treatment method, Tempo catalytic oxidation method), a biological method (e.g., enzymatic treatment method), a mechanical method (e.g., ultrafine grinding, ultrasonic crushing, high-pressure homogenization), or the like. The fiber raw material for preparing the above cellulose powder having a whiteness of ≥ 80% may include one or more of plant fibers such as cotton fibers (e.g. Gossypium fibers, kapok fibers), hemp fibers (e.g. sisal fibers, ramie fibers, jute fibers, flax fibers, marihuana fibers, abaca fibers, etc.), brown fibers, wood fibers, bamboo fibers, and grass fibers.

In some embodiments, the cellulose powder can also be prepared by: loosening the fiber raw material and slag removal, cooking with an alkaline solution (e.g. aqueous NaOH solution, which may have a concentration of 4 wt.% to 20 wt.%, optionally 5 wt.% to 15 wt.%), and then sequentially subjecting to water washing to remove impurities (e.g., water washing for 3 times to 6 times), bleaching (using for example sodium hypochlorite and/or hydrogen peroxide), acid washing to remove impurities, water washing to remove impurities, water discharging, and air drying, to obtain the cellulose powder.

In some embodiments, the modification solution may be an acid solution (e.g., an aqueous sulfuric acid solution, an aqueous boric acid solution, an aqueous phosphoric acid solution, an aqueous acetic acid solution) or an alkaline solution (for example a urea solution in organic solvent). Optionally, the modification solution is an acid solution.

In some embodiments, the acid solution may have a concentration of 5 wt.% to 80 wt.%.

When an aqueous sulfuric acid solution is used as the modification solution, the concentration of the acid solution may be 40 wt.% to 80 wt.%, thus the cellulose powder having a sulfonic acid group can be obtained. When an aqueous boric acid solution is used as the modification solution, the concentration of the acid solution may be 5 wt.% to 10 wt.%, thus the cellulose powder having a boric acid group can be obtained. When an aqueous phosphoric acid solution is used as the modification solution, the concentration of the acid solution may be 45 wt.% to 75 wt.%, thus the cellulose powder having a phosphoric acid group can be obtained. When an aqueous acetic acid solution is used as the modification solution, the concentration of the acid solution may be 40 wt.% to 80 wt.%, thus the cellulose powder having a carboxylic acid group can be obtained.

Optionally, the urea solution in organic solvent is a urea solutionin xylene, whereby the cellulose powder having an amine group can be obtained.

In some embodiments, the mass ratio of the cellulose powder to the modification solution may be from 1:2.5 to 1:50, optionally from 1:5 to 1:30.

When an aqueous sulfuric acid solution is used as the modification solution, the mass ratio of the cellulose powder to the acid solution may be from 1:5 to 1:30. When an aqueous boric acid solution is used as the modification solution, the mass ratio of the cellulose powder to the acid solution may be from 1:20 to 1:50. When an aqueous phosphoric acid solution is used as the modification solution, the mass ratio of the cellulose powder to the acid solution may be from 1:5 to 1:30. When an aqueous acetic acid solution is used as the modification solution, the mass ratio of the cellulose powder to the acid solution may be from 1:5 to 1:30. When a urea solution in organic solvent is used as the modification solution, the mass ratio of the cellulose powder to the urea solution in organic solvent may be from 1:4 to 1:40.

In some embodiments, when the modification solution is an acid solution, the reaction may be carried out at a condition of not higher than 80 °C, optionally at a condition of from 30 °C to 60 °C, and the reaction time between the cellulose powder and the modification solution may be from 0.5 h to 4 h, optionally from 1 h to 3 h.

In some embodiments, when the modification solution is an alkaline solution, the reaction may be carried out under conditions of from 100°C to 145 °C, and the reaction time of the cellulose powder and the modification solution may be from 1 h to 5 h.

In some embodiments, a grinder may be used for grinding, and a high pressure homogenizer may be used for cutting. By adjusting the grinding parameters of the grinder (e.g. number of grinding, grinding time, etc.) as well as the cutting parameters of the high-pressure homogenizer, nanocelluloses with different average diameters and/or different average lengths can be obtained.

In some embodiments, in Step 2, the filler solution may be obtained in may be the following manner: mixing filler, water and a modifier to obtain a filler solution having a pH of ≥ 7.5 and a Zeta potential of less than 0 mV, and the modifier comprises one or more selected from an alkali, an anionic surfactant and a nonionic surfactant.

Optionally, the alkali comprises one or more selected from KOH, NaOH, NaHCO₃, LiOH, NH₄OH, Mg(OH)₂ and Na₂CO₃.

Optionally, the anionic surfactant comprises one or more selected from a sulfonate anionic surfactant, a carboxylate anionic surfactant, a sulfate ester anionic surfactant and a phosphate ester anionic surfactant, and further optionally comprises one or more selected from alkylbenzene sulfonate (such as sodium butylnaphthalenesulfonate), C12-C20 alkyl sulfonate, sodium polyacrylate, ammonium polyacrylate, sodium hydroxyethyl sulfate and C12-C20 alkyl sodium sulfate.

Optionally, the nonionic surfactant comprises one or more selected from fluoroalkyl ethoxy alcohol ethers and fatty alcohol polyoxyethylene ethers.

In some embodiments, the nanocellulose solution may have a concentration of from 1 wt.% to 10 wt.%, optionally from 2 wt.% to 10 wt.%.

In some embodiments, the filler solution may have a concentration of from 30 wt.% to 60 wt.%, optionally from 35 wt.% to 55 wt.%.

In some embodiments, in S2, the coating slurry may have a pH of from 5 to 10, optionally from 6 to 9.

In some embodiments, in S2, the coating slurry may have a static viscosity of 1000 mpa.s or lower.

As a result, it effectively reduces film surface problem of the coating layer and the probability of occurrence of coating unevenness, thereby further improving the energy density and safety performance of the secondary battery.

In some embodiments, in S3, a coating machine is adopted in the coating step. In the present application, there is no particular limitation on the type of the coating machine, and for example, a commercially available coating machine can be used. The coating machine comprises a gravure roll; the gravure roll is used for transferring the coating slurry onto the porous substrate.

In some embodiments, in S3, transfer coating, spin spraying, dip coating, or the like may be adopted for the way of coating.

In some embodiments, the method further comprises the step of: S4, secondary coating: coating at least part of surface of the coating layer with a slurry containing a granular binder, and drying to form an adhesive layer.

The preparation method of the separator of the present application can provide a coating layer through one coating process, which greatly simplifies the production process of the separator.

Some raw materials and parameters such as their amounts used in the method for preparing the separator of the present application can be determined with respect to the separator of the first aspect of the embodiments of the present application, and will not be repeatedly described herein.

Unless otherwise specified, all raw materials used in the method for preparing the separator of the present application may be commercially available.

### Secondary Battery

The third aspect of embodiments of the present application provides a secondary battery.

Secondary batteries, also known as rechargeable batteries or storage batteries, refer to batteries that can be used continuously by activating active materials through charging after the battery is discharged. Normally, a secondary battery comprises an electrode assembly and an electrolyte, and the electrode assembly comprises a positive electrode plate, a negative electrode plate and a separator, the separator is disposed between the positive electrode plate and the negative electrode plate and is mainly used to prevent short circuit between positive electrode and negative electrode and meanwhile allows active ions to pass through. The present application has no particular limitation on the type of the secondary battery. For example, the secondary battery may be a lithium ion battery, a sodium ion battery, and the like. In particular, the secondary battery may be a lithium ion secondary battery.

The secondary battery of the third aspect of embodiments of the present application comprises the separator of the first aspect of embodiments of the present application or the separator prepared by the method of the second aspect of embodiments of the present application, wherein the separator is spaced between the positive electrode plate and the negative electrode plate. Optionally, the coating layer of the present application is present on at least the side of the separator close to the negative electrode plate. As a result, the secondary battery of the present application can have the combined characteristics of high energy density, high thermal safety performance and long service life.

### [Positive electrode plate]

In some embodiments, the positive electrode plate comprises a positive electrode current collector and a positive electrode film layer which is disposed on one or more surface of the positive electrode current collector and comprises a positive electrode active material. For example, the positive current collector has two opposite surfaces along the thickness direction of the positive current collector, and the positive electrode film layer is disposed on any one or both of the two opposite surfaces of the positive current collector.

When the secondary battery of the present application is a lithium ion battery, the positive electrode active material may comprise, but is not limited to, one or more of lithium transition metal oxides, lithium-containing phosphates, and their respective modified compounds thereof. Examples of lithium transition metal oxides may include, but are not limited to, one or more of lithium cobalt oxide, lithium nickel oxide, lithium manganese oxide, lithium nickel cobalt oxide, lithium manganese cobalt oxide, lithium nickel manganese oxide, lithium nickel cobalt manganese oxide, lithium nickel cobalt aluminum oxide, and respective modified compounds thereof. Examples of lithium-containing phosphates may include, but are not limited to, one or more of lithium iron phosphate, composite of lithium iron phosphate with carbon, lithium manganese phosphate, composite of lithium manganese phosphate with carbon, lithium manganese iron phosphate, composite of lithium manganese iron phosphate with carbon, and respective modified compounds thereof.

In some embodiments, in order to further increase the energy density of the secondary battery, the positive electrode active material for the lithium-ion battery may comprise one or more of lithium transition metal oxides having general formula LiₐNi_{b}Co_{c}M_{d}OₑA_{f} and modified compounds thereof. 0.8≤a≤1.2, 0.5≤b<1, 0<c<1, 0<d<1, 1≤e≤2, 0≤f≤1, M is selected from one or more of Mn, Al, Zr, Zn, Cu, Cr, Mg, Fe, V, Ti and B, and A s selected from one or more of N, F, S and Cl.

As an example, positive electrode active materials for lithium-ion batteries may include one or more of LiCoO₂, LiNiO₂, LiMnO₂, LiMn₂O₄, LiNi_{1/3}Co_{1/3}Mn_{1/3}O₂ (NCM333), LiNi_{0.5}Co_{0.2}Mn_{0.3}O₂ (NCM523), LiNi_{0.6}Co_{0.2}Mn_{0.2}O₂ (NCM622), LiNi_{0.8}Co_{0.1}Mn_{0.1}O₂ (NCM811), LiNi_{0.85}Co_{0.15}Al_{0.05}O₂, LiFePO₄and LiMnPO₄.

When the secondary battery of the present application is a sodium ion battery, the positive electrode active material may include but not limited to one or more of sodium-containing transition metal oxides, polyanion materials (such as phosphate, fluorophosphate, pyrophosphate, sulfate, and the like salts), and Prussian blue materials.

As an example, a positive electrode active material for a sodium-ion battery may include one or more of NaFeO₂, NaCoO₂, NaCrO₂, NaMnO₂, NaNiO₂, NaNi_{1/2}Ti_{1/2}O₀₂, NaNi_{1/2}Mn_{1/2}O₂, Na_{2/3}Fe_{1/3}Mn_{2/3}O₂, NaNi_{1/3}Co_{1/3}Mn_{1/3}O₂, NaFePO₄, NaMnPO₄, NaCoPO₄, Prussian blue materials and the materials having the general formula XₚM'_{q}(PO₄)ᵣOₓY₃₋ₓ. In general formula XₚM'_{q}(PO₄)ᵣOₓY₃₋ₓ, 0<p≤4, 0<q≤2, 1≤r≤3, 0≤x≤2, X is selected from one or more of H⁺, Li⁺, Na⁺, K⁺and NH₄⁺, M' is a transition metal cation and optionally is one or more of V, Ti, Mn, Fe, Co, Ni, Cu and Zn, and Y is a halogen anion and optionally is one or more of F, Cl and Br.

n the present application, the modified compounds of the above positive electrode active materials may be doping-modified and/or surface coating-modified of the positive electrode active materials.

In some embodiments, the positive electrode film layer may also optionally comprise a conductive agent for positive electrode. The present application does not particularly limit the type of conductive agent for positive electrode, and as an example, the conductive agent for positive electrode includes one or more of superconducting carbon, conductive graphite, acetylene black, carbon black, Ketjen black, carbon dots, carbon nanotubes, graphene, and carbon nanofibers. In some embodiments, the mass content of the conductive agent for positive electrode is ≤ 5%, based on the total mass of the positive electrode film layer. In some embodiments, the positive electrode film layer may further optionally comprise a binder for positive electrode. The present application does not particularly limit the type of the binder for positive electrode, and as an example, the binder for positive electrode may include one or more of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, and fluorinated acrylate resins. In some embodiments, the mass content of the binder for positive electrode is ≤ 5%, based on the total mass of the positive electrode film layer.

In some embodiments, the positive electrode current collector may be a metal foil or a composite current collector. As an example of the metal foil, aluminum foil may be used. The composite current collector may include a base layer of polymeric material and a layer of metallic material formed on one or more surface of the base layer of polymeric material. As an example, the metal material may comprise one or more of aluminum, aluminum alloy, nickel, nickel alloy, titanium, titanium alloy, silver, and silver alloy. As an example, the base layer of polymeric material may comprise one or more of polypropylene (PP), polyethylene terephthalate (PET), polybutylene terephthalate (PBT), polystyrene (PS), polyethylene (PE), and the like.

The positive electrode film layer is usually formed by applying a positive electrode slurry on a positive electrode current collector, drying and cold-pressing. The positive electrode slurry is usually formed by dispersing positive electrode active material, an optional conductive agent, an optional binder and any other components in a solvent and stirring them uniformly. The solvent may be N-methylpyrrolidone (NMP), but is not limited thereto.

### [Negative electrode plate]

In some embodiments, the negative electrode plate comprises a negative positive electrode current collector and a negative electrode film layer which is disposed on one or more surface of the negative electrode current collector and comprises a negative electrode active material. For example, the negative current collector has two opposite surfaces along the thickness direction of the negative current collector, and the positive electrode film layer is disposed on any one or both of the two opposite surfaces of the negative current collector.

The negative electrode active material can be a negative electrode active material well known in the art for secondary batteries. As an example, the negative electrode active material may include but not limited to one or more of natural graphite, artificial graphite, soft carbon, hard carbon, silicon-based material, tin-based material, and lithium titanate. The silicon-based material may include one or more of elemental silicon, silicon oxide, silicon-carbon composite, silicon-nitrogen composite, and silicon alloy. The tin-based material may include one or more of elemental tin, tin oxide, and tin alloy materials.

In some embodiments, the negative electrode film layer may also optionally comprise a conductive agent for negative electrode. The present application does not particularly limit the type of conductive agent for negative electrode, and as an example, the conductive agent for negative electrode may include one or more of superconducting carbon, conductive graphite, acetylene black, carbon black, Ketjen black, carbon dots, carbon nanotubes, graphene, and carbon nanofibers. In some embodiments, the mass content of the conductive agent for negative electrode is ≤ 5%, based on the total mass of the negative electrode film layer. In some embodiments, the negative electrode film layer may further optionally comprises a binder for negative electrode. The present application does not particularly limit the type of the binder for negative electrode, and as an example, the binder for negative electrode may include one or more of styrenebutadiene rubber (SBR), water-soluble unsaturated resin SR-1B, aqueous acrylic resins (e.g., polyacrylic acid PAA, polymethacrylic acid PMAA, sodium polyacrylate PAAS), polyacrylamide (PAM), polyvinyl alcohol (PVA), sodium alginate (SA), and carboxymethyl chitosan (CMCS). In some embodiments, the mass content of the binder for negative electrode is ≤ 5%, based on the total mass of the negative electrode film layer.

In some embodiments, the negative electrode film layer may further optionally comprises other auxiliary agents. As examples, other auxiliary agents may include thickeners, e.g., sodium carboxymethylcellulose (CMC), PTC thermistor material, etc. In some embodiments, the mass content of the other auxiliary agents is ≤ 2%, based on the total mass of the negative electrode film layer.

In some embodiments, the negative electrode collector may be a metal foil or a composite collector. As an example of a metal foil, a copper foil may be used. The composite current collector may include a base layer of polymeric material and a layer of metallic material formed on one or more surface of the base layer of polymeric material. As an example, the metal material may comprise one or more of copper, copper alloy, nickel, nickel alloy, titanium, titanium alloy, silver, and silver alloy. As an example, the base layer of polymeric material may comprise one or more of polypropylene (PP), polyethylene terephthalate (PET), polybutylene terephthalate (PBT), polystyrene (PS), polyethylene (PE), and the like.

The negative electrode film layer is usually formed by applying a negative electrode slurry on a negative electrode collector, drying and cold-pressing. The negative electrode slurry is typically formed by dispersing the negative active material, optional conductive agent, optional binder, other optional auxiliary agents in a solvent and stirring well. The solvent may be N-methylpyrrolidone (NMP) or deionized water, but is not limited thereto.

The negative electrode plate does not exclude additional functional layers other than the negative electrode film layer. For example, in some embodiments, the negative electrode plate described in the present application further comprises a conductive primer layer (such as composed of a conductive agent and a binder) sandwiched between the negative electrode current collector and the negative electrode film layer, and disposed on the surface of the negative electrode current collector. In some other embodiments, the negative electrode plate described in this application further comprises a protective layer covering the surface of the negative electrode film layer.

### [Electrolyte]

During the charging and discharging process of the battery, active ions are intercalated and deintercalated back and forth between the positive electrode plate and the negative electrode plate, and the electrolyte (or electrolytic solution) functions as conducting active ions between the positive electrode plate and the negative electrode plate. There is no specific limitation on the type of electrolyte in the present application, and it can be selected according to actual needs.

The electrolyte includes an electrolyte salt and a solvent. There is no specific limitation on the type of solvent and the electrolyte salt, and they can be selected according to actual needs.

When the secondary battery of the present application is a lithium ion battery, as an example, the electrolyte salt may comprise one or more of lithium hexafluorophosphate (LiPF₆), lithium tetrafluoroborate (LiBF₄), lithium perchlorate (LiClO₄), lithium hexafluoroarsenate (LiAsF₆), lithium difluorosulfimide (LiFSI), lithium bistrifluoromethanesulfonimide (LiTFSI), lithium trifluoromethanesulfonate (LiTFS), lithium difluoro(oxalate)borate (LiDFOB), bis(oxalate)borate (LiBOB), lithium difluorophosphate (LiPO₂F₂), lithium difluorobisoxalate phosphate (LiDFOP), and lithium tetrafluorooxalate phosphate (LiTFOP).

When the secondary battery of the present application is a sodium ion battery, as an example, the electrolyte salt may comprise, but is not limited to, one or more of sodium hexafluorophosphate (NaPF₆), sodium tetrafluoroborate (NaBF₄), sodium perchlorate (NaClO₄), sodium hexafluoroarsenate (NaAsF₆), sodium bisfluorosulfonimide (NaFSI), sodium bistrifluoromethanesulfonimide (NaTFSI), sodium trifluoromethanesulfonate (NaTFS), sodium difluoro(oxalate)borate (NaDFOB), sodium bis(oxalate)borate (NaBOB), sodium difluorophosphate (NaPO₂F₂), sodium difluorobisoxalate phosphate (NaDFOP) and sodium tetrafluorooxalate phosphate (NaTFOP).

As an example, the solvent may comprise, but is not limited to, one or more of ethylene carbonate (EC), propylene carbonate (PC), ethyl methyl carbonate (EMC), diethyl carbonate (DEC), dimethyl carbonate (DMC), dipropyl carbonate (DPC), methyl propyl carbonate (MPC), ethyl propyl carbonate (EPC), butylene carbonate (BC), fluoroethylene carbonate (FEC), methyl formate (MF), methyl acetate (MA), ethyl acetate (EA), propyl acetate (PA), methyl propionate (MP), ethyl propionate (EP), propyl propionate (PP), methyl butyrate (MB), ethyl butyrate (EB), 1,4-butyrolactone (GBL), sulfolane (SF), dimethylsulfone (MSM), methylethylsulfone (EMS), and diethylsulfone (ESE).

In some embodiments, the electrolytic solution may optionally comprise an additive. For example, the additives may comprise negative electrode film-forming additives, positive electrode film-forming additives, and additives that can improve certain performance of the battery, such as additives that improve overcharging performance of the battery, additives that improve high-temperature performance of the battery, and additives that improve low-temperature power/rating performance of the battery.

In some embodiments, the positive electrode plate, the separator, and the negative electrode plate may be fabricated into an electrode assembly by a winding process and/or a lamination process.

In some embodiments, the secondary battery may comprise an outer packaging. The outer packaging may be used to encapsulate the electrode assembly and the electrolyte.

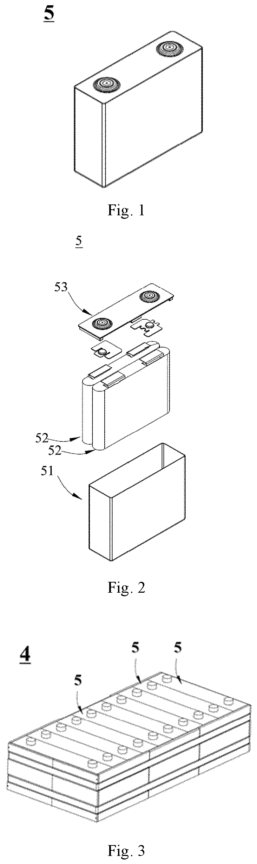

In some embodiments, the outer packaging of the secondary battery may be a hard housing, such as a hard plastic housing, aluminum housing, steel housing, or the like. The outer packaging of the secondary battery may also be a soft pack, such as a pouch type soft pack. The material of the soft pack may be plastic, such as one or more of polypropylene (PP), polybutylene terephthalate (PBT), and polybutylene succinate (PBS). The present application does not have particular limitation on the shape of the secondary battery, which may be cylindrical, square, or other arbitrary shapes. Fig. 1 shows a battery 5 of a square structure as an example.

In some embodiments, referring to Fig. 2, the outer packaging may include a housing 51 and a cover plate 53. The housing 51 may include a bottom plate and side plates connected to the bottom plate, and the bottom plate and the side plate are combined to form an accommodating cavity. The housing 51 has an opening communicating with the accommodating cavity, and the cover plate 53 can cover the opening to close the accommodating cavity. The positive electrode plate, the negative electrode plate, and the separator may be stacked and/or wounded into an electrode assembly 52. The battery assembly 52 is encapsulated in the accommodating cavity. The electrolyte is infiltrated in the electrode assembly 52. The number of electrode assemblies 52 included in the secondary battery 5 may be one or multiple, and may be adjusted according to requirements.

The preparation method of the secondary battery of the present application is well known. In some embodiments, a positive electrode plate, a separator, a negative electrode plate, and electrolytic solution can be assembled to form a secondary battery. As an example, the positive electrode plate, the separator, and the negative electrode plate can be formed into an electrode assembly by a winding process and/or a laminating process; the electrode assembly is placed in an outer packaging and dried, followed by injection with the electrolyte; after the processes including vacuum encapsulation, steady standing, chemical formation, and shaping, a secondary battery is obtained.

In some embodiments, the secondary battery of the present application can be assembled into a battery module, and the number of secondary batteries contained in the battery module can be multiple, and the specific number can be adjusted according to the application and capacity of the battery module.

Fig. 3 is a schematic diagram of a battery module 4 as an example. Referring to Fig. 3, in the battery module 4, a plurality of secondary batteries 5 may be disposed sequentially in the length direction of the battery module 4. Apparently, they may also be disposed in any other manner. Furthermore, the plurality of secondary batteries 5 may be fixed by fasteners.

Optionally, the battery module 4 may further include a housing having an accommodating space in which a plurality of secondary batteries 5 are accommodated.

In some embodiments, the above-mentioned battery module may also be assembled into a battery pack, and the number of battery modules contained in the battery pack can be adjusted according to the application and capacity of the battery pack.

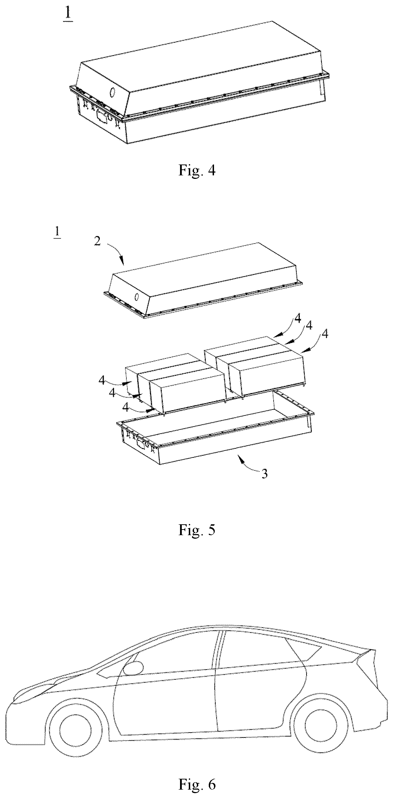

Figs. 4 and 5 are schematic diagrams of battery pack 1 as an example. As shown in Figs. 4 and 5, the battery pack 1 may comprise a battery case and a plurality of the battery modules 4 disposed in the battery case. The battery case comprises an upper case body 2 and a lower case body 3. The upper case body 2 is used for covering the lower case body 3 to form a closed space for receiving the battery modules 4. A plurality of battery modules 4 can be disposed in the battery case in any manner.

### Electrical device

The fourth aspect of embodiments of the present application provides an electrical device comprising one or more of the secondary battery, battery module, and battery pack of the present application. The secondary battery, battery module or battery pack can be used as a power source of the electrical device, and can also be used as an energy storage unit of the electrical device. The electrical device may be, but is not limited to, a mobile device (e.g., a mobile phone, a laptop computer, etc.), an electric vehicle (e.g., a pure electric vehicle, a hybrid electric vehicle, a plug-in hybrid electric vehicle, an electric bicycle, an electric scooter, an electric golf vehicle, an electric truck), an electric train, a ship, a satellite, an energy storage system, etc. The electrical device may comprise the secondary battery, the battery module or the battery pack selected according to its usage requirements.

Fig. 6 is a schematic diagrams of an electrical device as an example. The electrical device is a pure electric vehicle, a hybrid electric vehicle, or a plug-in hybrid electric vehicle. In order to meet high power and high energy density requirements of the electrical device, a battery pack or a battery module can be used.

As another example, the electrical device may be a mobile phone, a tablet computer, a notebook computer, etc. The electric device is generally required to be light and thin, and a secondary battery can be used as a power source.

### Examples

The following examples are intended to describe the present application more specifically, merely for the purpose of illustration. Various modifications and variations within the scope of the present application are apparent to those skilled in the related art. Unless otherwise stated, all parts, percentages, and ratios reported in the following examples are based on mass, and all reagents used in the examples are commercially available or synthesized by conventional methods, and can be directly obtained without further treatment, and the instruments used in the examples are commercially available.

### Preparation of modified nanocellulose C1

### Preparation of cellulose powder

After loosening the Gossypium linter and slag removal by a cotton opener, the obtained mixture was cooked at 150 °C with 5 wt.% NaOH aqueous solution for 2 hours, and then washed with water to remove impurities (3 times of water washing), bleached with sodium hypochlorite, washed with diluted hydrochloric acid to remove impurities, washed with water to remove impurities (1 time of water washing), water discharged and dried with air flow to obtain Gossypium cellulose powder with whiteness of ≥ 85%.

### Esterification of cellulose

1 kg of the obtained Gossypium cellulose powder was mixed with 30 kg of 60 wt.% sulfuric acid aqueous solution, and the reaction was carried out at 60°C for 1.5 h. After the reaction was completed, by washing with water (3 times of water washing), filtering, and removing acid and impurities, the cellulose nanowhiskers with sulfonic acid groups were obtained.

### Neutralization of cellulose

The pH of cellulose nanowhiskers with sulfonic acid groups was adjusted to neutral with 10 wt.% aqueous NaOH solution, and then dispersed with a grinder at high speed for 2.5 h. The grinding were carried out for 2 times, and then a high pressure homogenizer was used for nanoscale cutting, to obtain the nanocellulose C1 with sulfonic acid modifying groups having an average length of 400 nm and an average diameter of 25 nm, and the molar ratio of sulfonic acid groups to hydroxyl groups of 5:3.

### Preparation of modified nanocelluloses C2 to C4

The modified nanocelluloses C2 to C4 were prepared in a similar manner to the differences nanocellulose C1, with the differences detailed in Table 1. In the preparation, modified nanocelluloses with different average diameters and/or different average lengths can be obtained by adjusting the parameters of the grinder as well as the cutting parameters of the high-pressure homogenizer.

### Preparation of modified nanocellulose C5

### Preparation of cellulose powder

After loosening the Gossypium linter and slag removal by a cotton opener, the obtained mixture was cooked at 150 °C with 5 wt.% NaOH aqueous solution for 2 hours, and then washed with water to remove impurities (3 times of water washing), bleached with sodium hypochlorite, washed with diluted hydrochloric acid to remove impurities, washed with water to remove impurities (1 time of water washing), water discharged and dried with air flow to obtain Gossypium cellulose powder with whiteness of ≥ 85%. The obtained Gossypium cellulose powder was mixed with 20 wt.% aqueous NaOH solution at 10°C, stirred for 2 h, filtered, and washed with water twice to obtain cellulose powder.

### Esterification of cellulose

50 g of the obtained cellulose powder and 200 g of urea were placed in a three-port reactor with an oil-water separator. After the urea was dissolved, 5 g of xylene was added, and the temperature was raised to 137 °C under stirring. The reaction was terminated after 4 hours, followed by water washing (3 times of water washing), filtering and drying, to obtain cellulose carbamate.

### Neutralization of cellulose

The obtained cellulose carbamate was dissolved in 5 wt.% aqueous NaOH solution to obtain a homogeneous cellulose carbamate solution; and the cellulose carbamate solution was then dispersed with a grinder at high speed for 2.5 h. The grinding were carried out for 2 times, and then a high pressure homogenizer was used for nanoscale cutting, to obtain the nanocellulose with amine modifying groups having an average length of 400 nm and an average diameter of 25 nm, and the molar ratio of amine groups to hydroxyl groups of 4:3.

The molar ratio of anionic modifying groups to hydroxyl groups can be measured by the following method: according to the phthalic anhydride method in GB/T 12008.3-2009, the hydroxyl values of raw material cellulose and modified nanocellulose (milligrams of potassium hydroxide equivalent to the hydroxyl content per gram of sample) were respectively tested, and the obtained numerical unit was mg KOH/g, which was converted into mmol/g as the hydroxyl content. The content of the anionic modifying group (i.e. the content of the modified hydroxyl group) can be obtained anion doped by subtracting the hydroxyl content of the modified nanocellulose from the hydroxyl content of raw material cellulose, and thus the molar ratio of the anionic modifying group to the hydroxyl group can be calculated.

### Preparation of nanocellulose C6

Unmodified nanocellulose was used, having an average length of 400 nm and an average diameter of 25 nm. A product model of CNWS-50 purchased from Zhongke Leiming (Beijing) Technology Co., Ltd. was used, and can be further processed using a grinder and/or a high-pressure homogenizer to obtain nanocellulose with different average diameters and/or different average lengths.

**Table 1**

| No. | Types of acid solution | Concentration of acid solution | Reaction time (h) | Number of grinding | Anionic modifying group | Molar ratio of anionic modifying groups to hydroxyl groups | Average diameter (nm) | Average length (nm) | Aspect ratio |
|---|---|---|---|---|---|---|---|---|---|
| C1 | H₂SO₄ | 60% | 1.5 | 2 | Sulfonic acid group | 5: 3 | 25 | 400 | 16.0 |
| C2 | Acetic acid | 60% | 1.5 | 2 | Carboxyl group | 6: 3 | 25 | 400 | 16.0 |
| C3 | H₃PO₄ | 70% | 3.0 | 2 | Boric acid group | 4: 3 | 25 | 400 | 16.0 |
| C4 | H₃BO₃ | 7% | 3.0 | 2 | Phosphoric acid group | 4: 3 | 25 | 400 | 16.0 |

### Example 1

### (1) Preparation of separator

### S1, providing a PE porous substrate

PE porous substrate had a thickness of 5 µm and a porosity of 40%.

### S2, formulating a coating slurry

Step 1, 10 g of modified nanocellulose C1 and 190 g of water as solvent were uniformly mixed to formulate nanocellulose solution having a pH of 7.5 and a Zeta potential of -35.7 mV; Step 2, 6.6 g of NaOH aqueous solution with a concentration of 10 wt.% was added to 102 g of alumina dispersion with a solid content of 50 wt% (having secondary particle morphology and an average particle size of 180 nm) and mixed uniformly to prepare a filler solution having a pH of 9.5 and a Zeta potential of -10.1 mV; Step 3, the formulated nanocellulose solution and the formulated filler solution were uniformly mixed at the solution mass ratio of 10:3 to form a mixed solution, and then 1 wt.% aqueous polyacrylic acid as binder was added into the mixed solution (based on the total weight of the dried coating layer), to obtain a coating slurry.

### S3, coating

Both surfaces of the PE porous substrate were coated with the formulated coating slurry using a coating machine, and a separator was obtained by drying and slitting steps. The coating layer on one side of PE porous substrate had a thickness of 0.8 µm.

### (2) Preparation of positive electrode plate

The positive electrode active material LiNi_{0.8}Co_{0.1}Mn_{0.1}O₂ (NCM811), carbon black (Super P) as conductive agent, and polyvinylidene fluoride (PVDF) as binder were uniformly mixed at a mass ratio of 96.2:2.7:1.1 in an appropriate amount of solvent N-methylpyrrolidone (NMP) to obtain a positive electrode slurry; the positive electrode slurry was applied on an aluminum foil as positive electrode collector, and then dried and cold-pressed, slitted, and cut, to give the positive electrode plate. The positive electrode plate had an areal density of 0.207 mg/mm² and a compacted density of 3.5 g/cm³.

### (3) Preparation of negative electrode plate

Artificial graphite as negative electrode active material, carbon black (Super P) as conductive agent, styrene butadiene rubber (SBR) as binder, and carboxymethyl cellulose sodium (CMC) were mixed at a mass ratio of 96.4:0.7:1.8:1.1 in a suitable solvent deionized water to obtain a negative electrode slurry; the negative electrode slurry was applied onto a copper foil as negative electrode current collector; and after processes including drying, cold-pressing, slitting and cutting, the negative electrode plate was obtained. The negative electrode plate had an areal density of 0.126 mg/mm² and a compacted density of 1.7 g/cm³.

### (4) Preparation of electrolyte

Ethylene carbonate (EC) and ethyl methyl carbonate (EMC) at a volume ratio of 30:70 were mixed to obtain an organic solvent, and then a fully dried LiPF₆ was dissolved in the above organic solvent, to prepare an electrolyte with a concentration of 1 mol/L.

### (5) Preparation of secondary battery

The positive electrode plate, the separator, and the negative electrode plate were stacked and wound in sequence to obtain an electrode assembly; the electrode assembly was placed in a outer packaging and dried, followed by injection with the electrolyte; after the processes including vacuum encapsulation, standing, chemical formation, and shaping, a secondary battery was obtained.

### Examples 2-9

The secondary batteries were prepared by a method similar to that of Example 1, except that in the preparation of the separators, the preparation parameters of the coating slurries were different, and the specific parameters were detailed in Table 2.

### Example 10

The secondary batteries were prepared by a method similar to that of Example 1, except that in the preparation of the separators, alumina with primary particle morphology was further added during the formulation of the coating slurry, and the specific parameters were detailed in Table 2.

Step 1, 10 g of modified nanocellulose C1 and 190 g of water as solvent were uniformly mixed to formulate nanocellulose solution having a pH of 7.5 and a Zeta potential of -35.7 mV; Step 2, 6.6 g of NaOH aqueous solution with a concentration of 10 wt.% was added to 102 g of alumina dispersion with a solid content of 50 wt% (having a mixture of secondary particle morphology and primary particle morphology in a mass ratio of 5:1, and the secondary particles having an average particle size of 180 nm and the primary particles having an average particle size of 400 nm) and mixed uniformly to prepare a filler solution having a pH of 9.5 and a Zeta potential of -10.1 mV; Step 3, the formulated nanocellulose solution and the formulated filler solution were uniformly mixed at the solution mass ratio of 10:3 to form a mixed solution, and then 1 wt.% aqueous polyacrylic acid as binder was added into the mixed solution (based on the total weight of the dried coating layer), to obtain a coating slurry.

### Comparative example 1

The secondary battery was prepared by a method similar to that of Example 1, except that in the preparation of the separator, the unmodified nanocellulose C6 was used and the unmodified alumina having primary particle morphology was used during the formulation of the coating slurry, and the specific parameters were detailed in Table 2.

Step 1, 10 g of unmodified nanocellulose C6 and 190 g of water as solvent were uniformly mixed to formulate nanocellulose solution having a pH of 8.6 and a Zeta potential of 20.5 mV; Step 2, 102 g of alumina dispersion with a solid content of 50 wt% (having primary particle morphology, the primary particles having an average particle size of 800 nm) was used as a filler solution having a pH of 7.4 and a Zeta potential of -5.5 mV; Step 3, the formulated nanocellulose solution and the formulated filler solution were uniformly mixed at the solution mass ratio of 10:3 to form a mixed solution, and then 1 wt.% aqueous polyacrylic acid as binder was added into the mixed solution (based on the total weight of the dried coating layer), to obtain a coating slurry.

### Comparative example 2

The secondary battery was prepared by a method similar to that of Example 1, except that in the preparation of the separator, the unmodified nanocellulose C6 was used and the unmodified alumina having secondary particle morphology was used during the formulation of the coating slurry, and the specific parameters were detailed in Table 2.

Step 1, 10 g of unmodified nanocellulose C6 and 190 g of water as solvent were uniformly mixed to formulate nanocellulose solution having a pH of 8.6 and a Zeta potential of 20.5 mV; Step 2, 102 g of alumina dispersion with a solid content of 50 wt% (having secondary particle morphology, the secondary particles having an average particle size of 180 nm) was used as a filler solution having a pH of 5.6 and a Zeta potential of 39.3 mV; Step 3, the formulated nanocellulose solution and the formulated filler solution were uniformly mixed at the solution mass ratio of 10:3 to form a mixed solution, and then 1 wt.% aqueous polyacrylic acid as binder was added into the mixed solution (based on the total weight of the dried coating layer), to obtain a coating slurry.

### Comparative example 3

The secondary battery was prepared by a method similar to that of Example 1, except that in the preparation of the separator, the unmodified nanocellulose C6 was used during the formulation of the coating slurry and the specific parameters were detailed in Table 2.

Step 1, 10 g of unmodified nanocellulose C6 and 190 g of water as solvent were uniformly mixed to formulate nanocellulose solution having a pH of 8.6 and a Zeta potential of 20.5 mV; Step 2, 6.6 g of NaOH aqueous solution with a concentration of 10 wt.% was added to 102 g of alumina dispersion with a solid content of 50 wt% (having secondary particle morphology and an average particle size of 180 nm) and mixing uniformly to prepare a filler solution having a pH of 9.5 and a Zeta potential of -10.1 mV; Step 3, the formulated nanocellulose solution and the formulated filler solution were uniformly mixed at the solution mass ratio of 10:3 to form a mixed solution, and then 1 wt.% aqueous polyacrylic acid as binder was added into the mixed solution (based on the total weight of the dried coating layer), to obtain a coating slurry.

### Comparative example 4

The secondary battery was prepared by a method similar to that of Example 1, except that in the preparation of the separator, the unmodified alumina having secondary particle morphology was used during the formulation of the coating slurry, and the specific parameters were detailed in Table 2.

Step 1, 10 g of modified nanocellulose C1 and 190 g of water as solvent were uniformly mixed to formulate nanocellulose solution having a pH of 7.5 and a Zeta potential of -35.7 mV; Step 2, 102 g of alumina dispersion with a solid content of 50 wt% (having secondary particle morphology, the secondary particles having an average particle size of 180 nm) was used as a filler solution having a pH of 5.6 and a Zeta potential of 39.3 mV; Step 3, the formulated nanocellulose solution and the formulated filler solution were uniformly mixed at the solution mass ratio of 10:3 to form a mixed solution, and then 1 wt.% aqueous polyacrylic acid as binder was added into the mixed solution (based on the total weight of the dried coating layer), to obtain a coating slurry.

### Test section

### (1) Zeta potential test of coating layer

A blade was used to scrape 30 g of powders of coating material from the prepared separator (the scraping depth does not exceed the boundary zone between the coating layer and the porous substrate); then the powders were stirred with 2000 g of deionized water using a stirrer with a toothed disk at a certain stirring speed (for example, 2000 r/min) to obtain a dispersion (for example, the stirring time of 1.5 hours); the obtained dispersion was placed in a sample cell, and then tested using a Zeta potentiometer to obtain the Zeta potential of the dispersion, that is, the Zeta potential of the coating layer. The sample cell may be DTS1070 Zeta potential capillary sample cell from Malvern, and the Zeta potentiometer may be Zetasizer Advance nanoparticle size potentiometer from Malvern.

GB/T 32671.2-2019 and ISO 13099-2-2012 may be referred to as test standards. For the accuracy, 5 parallel samples can be taken for testing, and the average value can be taken as the test result.

### (2) Zeta potential test of nanocellulose solution, filler solution, coating slurry

The above solutions were placed in a sample cell separately, and then tested using a Zeta potentiometer to obtain the Zeta potential of each solution. The sample cell may be DTS1070 Zeta potential capillary sample cell from Malvern, and the Zeta potentiometer may be Zetasizer Advance nanoparticle size potentiometer from Malvern. GB/T 32671.2-2019 and ISO 13099-2-2012 may be referred to as test standards. For the accuracy, 5 parallel samples can be taken for testing, and the average value can be taken as the test result.

### (3) Thermal shrinkage rate test of separator

Sample preparation: The separator prepared above was punched into samples with a width of 50 mm and a length of 100 mm using a punching machine; and five parallel samples were placed on A4 paper and fixed; and then the A4 paper loaded with the samples was placed on corrugated paper with a thickness of from 1 mm to 5 mm.

Sample test: a blast oven was set to the temperature of 150 °C; After the temperature reached the set temperature and stabilized for 30 minutes, timing was started and the A4 paper placed on the corrugated paper was placed into the blast oven, until the set time (1 h in this application) was reached; the length and width of the separator were measured, and the values were marked as a and b, respectively.

Calculation of thermal shrinkage rate: machine direction (MD) heat shrinkage rate = [(100-a)/100] × 100%, transverse direction (TD) thermal shrinkage rate = [(50-b)/50] × 100%, and the average value of five replicate samples was taken as the test result.

### (4) Air permeability test of separator

Time required for 100 mL of air to pass through the separator at 25°C was tested and for the accuracy, the average value of 5 parallel samples was taken as the test result. The test instrument may be the Kumagai KRK Wangyan air permeability tester.

### (5) Test of cycle performance of secondary battery

At 25 °C, the secondary battery was charged to 4.2 V with a constant current of 1 C, continued to charge at constant voltage until the current was ≤ 0.05 C, at which time the secondary battery was in a fully charged state and the charge capacity was recorded, i.e. the charge capacity after the first cycle; After the secondary battery was allowed to stand for 5 min, it was discharged to 2.8 V with a constant current of 1 C, which was a cyclic charge and discharge process and at which time the discharge capacity was recorded, i.e. the discharge capacity after the first cycle. The secondary battery was subjected to the above cyclic charge-discharge process, and the discharge capacity after each cycle was recorded. Capacity retention rate (%) of secondary battery at 25 °C after 500 cycles = discharge capacity after 500 cycles/discharge capacity after the 1st cycle× 100%. For the accuracy, the average value of 5 parallel samples was taken as the test result.

### (6) Hot box testing of secondary battery

The secondary battery was charged with a constant current of 1 C to 4.2 V at 25 °C, and continued to charge with the constant voltage until the current was ≤ 0.05 C, and allowed to stand for 5 minutes; then secondary battery with a fixture was tested in a DHG-9070A DHG series high-temperature oven, and raised from room temperature to 80 ± 2 °C at a rate of 5 °C/min, and held for 30 minutes; then, the temperature was raised at a heating rate of 5 °C/min. Every time the temperature was raised by 5 °C, the temperature was kept for 30 minutes. During the temperature rise process, the surface temperature change of the secondary battery was monitored. When the temperature starts to rise sharply, the corresponding oven temperature was recorded as the hot box failure temperature of the secondary battery. The higher hot box failure temperature of a secondary battery means the better thermal safety performance of the secondary battery. For the accuracy, the average value of 5 parallel samples was taken as the test result.

As can be seen from Tables 2 and 3 and Examples 1 to 10, by disposing a coating layer comprising nanocellulose (that constitutes a three-dimensional skeleton structure) and a filler on both surfaces of the porous substrate and adjusting the Zeta potential of the coating layer to be less than 0 mV, it enables the obtained separators to have the combined characteristics of low thermal shrinkage and high air permeability, and enables the obtained secondary batteries to have the combined characteristics of high thermal safety performance and good cycle performance. The inventor speculates that the possible reason is that when the Zeta potential of the coating layer is within the suitable range, the coating slurry has a good dispersibility, thus after after the coating slurry is dried, a coating layer with good uniformity of areal density and thickness can be formed, which improves the heat resistance of the separator, and at the same time the coating layer has uniform pore distribution, which ensures good ion conductivity of the coating layer, thereby enabling the secondary battery to have the combined characteristics of high thermal safety performance and good cycle performance.

None of the coating layers of the separators prepared in Comparative Examples 1 to 4 satisfied the Zeta potential of less than 0 mV, thus the separators cannot have the combined characteristics of low thermal shrinkage and high air permeability, and the obtained secondary batteries cannot have the combined characteristics of high thermal safety performance and good cycle performance.

It should be noted that the present application is not limited to the above-mentioned embodiments. The above-mentioned embodiments are merely examples, and within the scope of the technical solutions of the present application, embodiments that have substantially the same configuration as the technical idea and exert the same effects are included in the technical scope of the present application. In addition, without departing from the scope of the present application, various modifications conceivable by those skilled in the art can be introduced to the embodiments, and other forms constructed by combining some components in the embodiments are also included in the scope of the present application..

**Table 2**

| No. | Nanocellulose solution | | | | | Filler solution | | | | | | | Mass ratio of nanocellulose solution to filler solution |
|---|---|---|---|---|---|---|---|---|---|---|---|---|---|
| | Types | Nanocellulose | Mass (g) of solvent water | pH of solution | Zeta potential (mV) of solution | Types | Average particle size (nm) | Mass (g) of filler dispersion | Concentration of NaOH aqueous solution | Mass (g) of NaOH aqueous solution | pH of solution | Zeta potential (mV) of solution | |
| Example 1 | C1 | 10 | 190 | 7.5 | -35.7 | Alumina | 180 | 102 | 10% | 6.6 | 9.5 | -10.1 | 10: 3 |
| Example 2 | C1 | 10 | 190 | 7.5 | -35.7 | Alumina | 180 | 102 | 10% | 2.5 | 7.6 | -3.1 | 10: 3 |
| Example 3 | C1 | 10 | 190 | 7.5 | -35.7 | Alumina | 180 | 102 | 10% | 5.3 | 9 | -6.2 | 10: 3 |
| Example 4 | C1 | 10 | 190 | 7.5 | -35.7 | Alumina | 180 | 102 | 10% | 8.5 | 10.5 | -17.6 | 10: 3 |
| Example 5 | C1 | 10 | 190 | 7.5 | -35.7 | Alumina | 180 | 102 | 10% | 10.3 | 11 | -28.7 | 10: 3 |
| Example 6 | C2 | 10 | 190 | 7.5 | -40.6 | Alumina | 180 | 102 | 10% | 2.5 | 7.6 | -3.1 | 10: 3 |
| Example 7 | C3 | 10 | 190 | 7.5 | -28.5 | Alumina | 180 | 102 | 10% | 5.3 | 9 | -6.2 | 10: 3 |
| Example 8 | C4 | 10 | 190 | 7.5 | -27.9 | Alumina | 180 | 102 | 10% | 6.6 | 9.5 | -10.1 | 10: 3 |
| Example 9 | C5 | 10 | 190 | 8.5 | -2.5 | Alumina | 180 | 102 | 10% | 8.5 | 10.5 | -17.6 | 10: 3 |
| Example 10 | C1 | 10 | 190 | 7.5 | -35.7 | Alumina | 180/400 | 102 | 10% | 6.6 | 9.5 | -10.1 | 10: 3 |
| Comparative Example 1 | C6 | 10 | 190 | 8.6 | 20.5 | Alumina | 800 | 102 | / | / | 7.4 | -5.5 | 10: 3 |
| Comparative Example 2 | C6 | 10 | 190 | 8.6 | 20.5 | Alumina | 180 | 102 | / | / | 5.6 | 39.3 | 10: 3 |
| Comparative Example 3 | C6 | 10 | 190 | 8.6 | 20.5 | Alumina | 180 | 102 | 10% | 6.6 | 9.5 | -10.1 | 10: 3 |
| Comparative Example 4 | C1 | 10 | 190 | 7.5 | -35.7 | Alumina | 180 | 102 | / | / | 5.6 | 39.3 | 10:3 |

**Table 3**

| No. | Coating slurry | | Coating layer after drying | | Thermal shrinkage rate at 150 °C/1h (%) | | Air permeability (s/100 mL) | Performance of secondary battery | |
|---|---|---|---|---|---|---|---|---|---|
| | Static viscosity (mpa.s) | Zeta potential (mV) | Thickness (µm) | Zeta potential (mV) | MD | TD | | Capacity retention rate after 500 cycles at 25°C | Hot box failure temperature (°C) |
| Example 1 | 239.2 | -44.1 | 0.8 | -12.6 | 0.8 | 1.2 | 185.9 | 92.0% | 153.5 |
| Example 2 | 897.6 | -27.7 | 0.8 | -5.9 | 2.2 | 2.5 | 171.4 | 85.5% | 145.2 |
| Example 3 | 433.9 | -36.9 | 0.8 | -8.7 | 1.5 | 1.8 | 175.2 | 88.4% | 150.2 |
| Example 4 | 189.9 | -51.4 | 0.8 | -15.8 | 1.3 | 1.5 | 205.3 | 87.4% | 148.4 |
| Example 5 | 156.5 | -62.1 | 0.8 | -23.4 | 2.0 | 2.3 | 231.1 | 85.9% | 146.9 |
| Example 6 | 851.2 | -38.5 | 0.8 | -21.8 | 2.3 | 2.5 | 177.2 | 85.2% | 145.9 |
| Example 7 | 328.5 | -25.2 | 0.8 | -6.5 | 2.5 | 2.7 | 175.2 | 85.4% | 144.6 |
| Example 8 | 289.8 | -20.4 | 0.8 | -5.4 | 2.8 | 2.9 | 169.8 | 85.9% | 145.1 |
| Example 9 | 982.9 | -5.5 | 0.8 | -1.9 | 2.9 | 3.0 | 282.2 | 84.8% | 145.2 |
| Example 10 | 234.9 | -46.2 | 0.8 | -12.8 | 0.9 | 1.3 | 178.3 | 92.8% | 153.1 |
| Comparative Example 1 | 699.2 | 20.5 | 2.0 | 6.3 | 8.5 | 11.5 | 174.4 | 82.4% | 142.9 |
| Comparative Example 2 | 792.3 | 45.4 | 0.8 | 13.5 | 6.5 | 7.6 | 172.9 | 83.1% | 143.3 |
| Comparative Example 3 | 986.6 | 1.6 | 0.8 | 15.5 | 5.3 | 6.7 | 173.0 | 84.1% | 144.0 |
| Comparative Example 4 | 1035.9 | 3.7 | 0.8 | 13.1 | 6.0 | 7.1 | 183.4 | 83.9% | 143.8 |

## Claims

1. A separator, comprising a porous substrate and a coating layer disposed on one or more surface of the porous substrate, wherein the coating layer comprises a three-dimensional skeleton structure and a filler, and at least a portion of the filler is filled in the three-dimensional skeleton structure, and the coating layer has a Zeta potential of less than 0 mV.
the Zeta potential of the coating layer is tested by the following method: stirring and mixing 30 g of coating material powder with 2000 g of deionized water to obtain a dispersion, and testing the Zeta potential of the obtained dispersion with a Zeta potentiometer, test result being the Zeta potential of the coating layer.

2. The separator according to claim 1, wherein the coating layer has a Zeta potential of from -50 mV to -5 mV, optionally from -25 mV to -5 mV.

3. The separator according to claim 1 or 2, wherein a material that constitutes the three-dimensional skeleton structure comprises one or more of organic rod-shaped substance and organic tubular substance;
optionally, the material that constitutes the three-dimensional skeleton structure comprises one or more of nanocellulose, polytetrafluoroethylene nanofibers and polyamide nanofibers;
optionally, the nanocellulose comprises one or more of cellulose nanofibers, cellulose nanowhiskers and bacterial nanocellulose;

4. The separator according to any one of claims 1 to 3, wherein a material that constitutes the three-dimensional skeleton structure comprises nanocellulose, and the nanocellulose has hydroxyl group and anionic modifying group, optionally the anionic modifying group comprises one or more of an amino group, a carboxyl group, a sulfonic acid group, a boric acid group, and a phosphoric acid group, and more optionally comprises one or more of a sulfonic acid group, a boric acid group, and a phosphoric acid group.

5. The separator according to claim 4, wherein a molar ratio of the anionic modifying group to the hydroxyl group is from 1:4 to 4:1, more optionally from 2:3 to 7:3.

6. The separator according to any one of claims 1 to 5, wherein a material that constitutes the three-dimensional skeleton structure has an average diameter of ≤ 40 nm, optionally from 10 nm to 35 nm.

7. The separator according to any one of claims 1 to 6, wherein,
a material that constitutes the three-dimensional skeleton structure has an average length of from 100 nm to 600 nm, optionally from 200 nm to 400 nm; and/or
a material that constitutes the three-dimensional skeleton structure has an aspect ratio of from 5 to 60, optionally from 15 to 30.

8. The separator according to claims 1 to 7, wherein the filler comprises one or more of filler particles with primary particle morphology and filler particles with secondary particle morphology;
optionally, the filler comprises the filler particles with secondary particle morphology;
further optionally, the filler comprises the filler particles with primary particle morphology and the filler particles with secondary particle morphology.

9. The separator according to claim 8, wherein the filler particles with primary particle morphology satisfies one or more of the following conditions (1) to (3):
(1) the filler particles with primary particle morphology have an average particle diameter of from 200 nm to 800 nm, optionally from 200 nm to 400 nm;
(2) the filler particles with primary particle morphology have a BET specific surface area of ≤ 10 m²/g, optionally from 3 m²/g to 7 m²/g;
(3) the filler particles with primary particle morphology are present in an amount of ≤ 30 wt.%, optionally from 5 wt.% to 25 wt.%, based on the total weight of the coating layer.

10. The separator according to claim 8 or 9, wherein the filler particles with secondary particle morphology satisfies one or more of the following conditions (1) to (3):
(1) the filler particles with secondary particle morphology have an average particle diameter of ≤ 200 nm, optionally from 50 nm to 200 nm;
(2) the filler particles with secondary particle morphology have a BET specific surface area of ≥ 20 m²/g, optionally from 30 m²/g to 80 m²/g;
(3) the filler particles with secondary particle morphology are present in an amount of ≥ 60 wt.%, optionally from 70 wt.% to 90 wt.%, based on the total weight of the coating layer.

11. The separator according to claims 1 to 10, wherein the filler comprises filler particles with primary particle morphology and filler particles with secondary particle morphology, and a mass ratio of filler particles with secondary particle morphology to filler particles with primary particle morphology is from 2:1 to 27:1, optionally from 5:1 to 15:1.

12. The separator according to claims 1 to 11, wherein the filler comprises one or more of inorganic particles and organic particles;
optionally, the inorganic particles comprise one or more of inorganic particles with a dielectric constant of 5 or more, inorganic particles capable of transporting active ions and inorganic particles capable of undergoing electrochemical oxidation and reduction;
optionally, the organic particles comprise one or more selected from polystyrene, polyethylene, polyimide, melamine resin, phenolic resin, polypropylene, polyester, polyphenylene sulfide, polyaramid, polyamideimide, polyimide, copolymers of butyl acrylate and ethyl methacrylate, and mixtures thereof.

13. The separator according to any one of claims 1 to 12, wherein,
the three-dimensional skeleton structure in the coating layer is present in an amount of from 6 wt.% to 35 wt.%, optionally from 10 wt.% to 30 wt.%, based on the total weight of the coating layer; and/or,
a mass ratio of the three-dimensional skeleton structure to the filler is from 1:2 to 1:15.5, optionally from 1:5 to 1:10.

14. The separator according to claims 1 to 13, wherein the coating layer further comprises a non-granular binder;
optionally, the non-granular binder comprises an aqueous solution-type;
optionally, the non-granular binder in the coating layer is persent in an amount of ≤ 2 wt.%, based on the total weight of the coating layer.

15. The separator according to any one of claims 1 to 14, wherein,
the porous substrate has a thickness of ≤ 6 µm, optionally from 3 µm to 5 nm; and/or,
the coating layer has a thickness of ≤ 1 µm, optionally from 0.5 µm to 0.8 nm.

16. The separator according to claims 1 to 15, wherein the separator further comprises an adhesive layer, the adhesive layer is disposed on at least part of the surface of the coating layer, and the adhesive layer comprises a granular binder;
optionally, the granular binder comprises one or more of acrylate monomer homopolymer or copolymer, acrylic monomer homopolymer or copolymer, fluorine-containing olefin monomer homopolymer or copolymer.

17. The separator according to any one of claims 1 to 16, wherein the separator satisfies one or more of the following conditions (1) to (7):
(1) the separator has a longitudinal thermal shrinkage rate at 150°C for 1 h of ≤ 5%, optionally from 0.5% to 3%;
(2) the separator has a lateral thermal shrinkage rate at 150°C for 1 h of ≤ 5%, optionally from 0.5% to 3%;
(3) the separator has a longitudinal tensile strength of ≥ 2000 kg/cm², optionally from 2500 kg/m² to 4500 kg/m²;
(4) the separator has a lateral tensile strength of ≥ 2000 kg/m², optionally 2500 kg/m² to 4500 kg/m²;
(5) the separator has a wetting length of ≥ 30 mm, optionally from 30 mm to 80 mm;
(6) the separator has a wetting speed of ≥ 3 mm/s, optionally from 3 mm/s to 10 mm/s; and
(7) the separator has an air permeability of ≤ 300 s/100 mL, optionally from 100 s/100 mL to 230 s/100 mL.

18. A method for preparing the separator according to any one of claims 1 to 17, comprising the following steps: S1, providing porous substrate; S2, formulating a coating slurry: mixing a material that constitutes the three-dimensional skeleton structure and fillers in a predetermined proportion in a solvent to prepare the coating slurry; S3, coating: coating one or more surface of the porous substrate with the coating slurry to form a coating layer, and drying to obtain a separator,
wherein the separator comprises a porous substrate and a coating layer disposed on one or more surface of the porous substrate, the coating layer comprises a three-dimensional skeleton structure and a filler, and at least a portion of the filler is filled in the three-dimensional skeleton structure, and the coating layer has a Zeta potential of less than 0 mV,
the Zeta potential of the coating layer is tested by the following method: stirring and mixing 30 g of coating material powder with 2000 g of deionized water to obtain a dispersion, and testing the Zeta potential of the obtained dispersion with a Zeta potentiometer, test result being the Zeta potential of the coating layer.

19. The method according to claim 18, wherein
the coating slurry has a pH of from 5 to 10, optionally from 6 to 9; and/or
the coating slurry has a static viscosity of 1000 mpa.s or lower.

20. The method according to claim 18 or 19, wherein the coating slurry is obtained in the following manner: Step 1, formulating a nanocellulose solution: mixing the nanocellulose having an anionic modifying group with water to prepare into the nanocellulose solution, wherein the nanocellulose solution has a pH of between 5 and 9 and a Zeta potential of less than 0 mV; Step 2, formulating a filler solution having a pH of ≥ 7.5, a Zeta potential of less than 0 mV; Step 3, mixing: mixing the nanocellulose solution and the filler solution in a predetermined proportion to obtain a coating slurry, wherein the coating slurry has a Zeta potential of -5 mV or lower.

21. The method according to claim 20, wherein
the nanocellulose solution has a concentration of from 1 wt.% to 10 wt.%, optionally from 2 wt.% to 10 wt.%; and/or,
the filler solution has a concentration of from 30 wt.% to 60 wt.%, optionally from 35 wt.% to 55 wt.%.

22. The method according to claim 20 or 21, wherein the nanocellulose having an anionic modifying group is obtained in the following manner: mixing and reacting nanocellulose powder with a modification solution; and then washing and removing impurities to obtain cellulose nanowhiskers having an anionic modifying group; adjusting pH of the obtained cellulose nanowhiskers having an anionic modifying group to neutral; and grinding and cutting to obtain nanocellulose having an anionic modifying group, optionally, the modification solution is aqueous sulfuric acid, aqueous boric acid, aqueous phosphoric acid, aqueous acetic acid or urea solution in organic solvent.

23. The method according to claim 20 or 21, wherein the filler solution is obtained in the following manner: mixing filler, water and a modifier to obtain a filler solution having a pH of ≥ 7.5 and a Zeta potential of less than 0 mV, and the modifier comprises one or more selected from an alkali, an anionic surfactant and a nonionic surfactant;
optionally, the alkali comprises one or more of KOH, NaOH, NaHCO₃, LiOH, NH₄OH, Mg(OH)₂ and Na₂CO₃;
optionally, the anionic surfactant comprises one or more selected from a sulfonate anionic surfactant, a carboxylate anionic surfactant, a sulfate ester anionic surfactant and a phosphate ester anionic surfactant, and further optionally comprises one or more selected from alkylbenzene sulfonate, C12-C20 alkyl sulfonate, sodium polyacrylate, ammonium polyacrylate, sodium hydroxyethyl sulfate and C12-C20 alkyl sodium sulfate;
optionally, the nonionic surfactant comprises one or more selected from fluoroalkyl ethoxy alcohol ethers and fatty alcohol polyoxyethylene ethers.

24. The method according to any one of claims 18 to 23, further comprising the step of: S4, secondary coating: coating at least part of surface of the coating layer with a slurry containing a granular binder, and drying to form an adhesive layer.

25. A secondary battery, comprising the separator according to any one of claims 1 to 17 or the separator prepared by the method according to any one of claims 18 to 24.

26. An electrical device, comprising the secondary battery according to claim 25.
